(19) Europäisches Patentamt
European Patent Office
Office européen des brevets

(11) Publication number: 0 578 062 A2

(12) **EUROPEAN PATENT APPLICATION**

(21) Application number: **93110091.1**

(51) Int. Cl.5: **G05B 19/35**

(22) Date of filing: **24.06.93**

(30) Priority: **29.06.92 JP 170625/92**
**21.10.92 JP 283287/92**

(43) Date of publication of application:
**12.01.94 Bulletin 94/02**

(84) Designated Contracting States:
**BE CH DE FR GB IT LI NL**

(71) Applicant: **SUNNY CO. LTD.**
**No.29-1, Toyotamakita 5-chome**
**Nerima-ku, Tokyo(JP)**
Applicant: **Kawabata, Akira**
**No.44-1, Amanuma 1-chome**
**Suginami-ku, Tokyo(JP)**

(72) Inventor: **Kawabata, Akira**
**N . 44-1, Amanuma 1-chome**
**Suginami-ku, Tokyo(JP)**

(74) Representative: **LOUIS, PÖHLAU, LOHRENTZ & SEGETH**
**Postfach 3055**
**D-90014 Nürnberg (DE)**

(54) **Control system for driving an object.**

(57) A control system for driving an object (1) in a proper manner, comprises: a drive portion (2, 3) for driving the object (1) being driven; a processing means (6) which produces a signal for controlling an output of the drive portion (2, 3); a memory (7) for storing information which is required of the processing means (6) to produce the signal; and, a variable resistor having its resistance value vary according to the output of the drive portion (2, 3), the variable resistor (8) being mechanically connected with an output shaft of the drive portion (2, 3). The control system is characterized in that : the processing means (6) reads the resistance value of the variable resistor (8) to determine an absolute position of the object (1) on the basis of the resistance value, the absolute position being stored in the memory (7) as one of the information.

FIG. 1

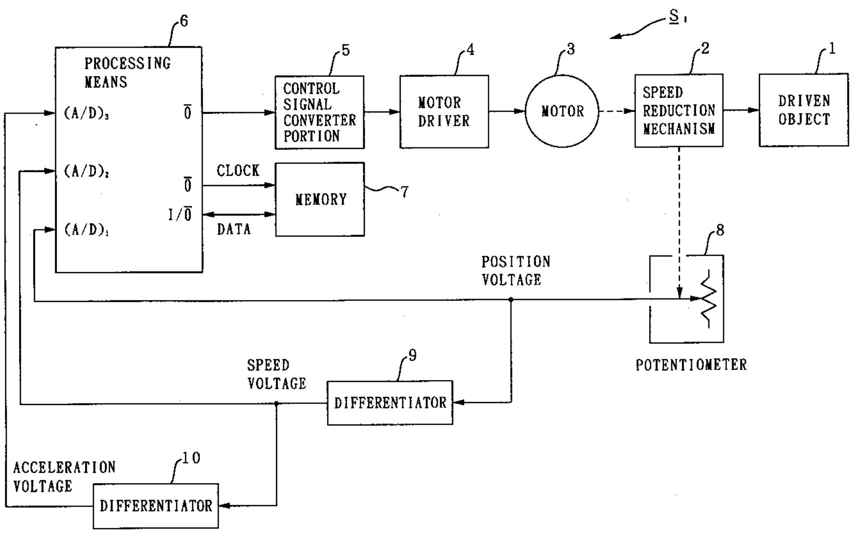


EP 0 578 062 A2

## BACKGROUND OF THE INVENTION

### Field of the Invention:

The present invention relates to a control system for driving an object such as automatic doors, blinds, shutters, curtains and the like in a proper manner.

### Description of the Prior Art:

A conventional control system for properly driving an object such as doors and the like has a construction in which:

An object to be driven is driven by a drive portion of the control system; the drive portion is controlled in operation by a control signal issued from a processing means of the control system; and, the processing means has its memory portion store information which is obtained by detecting the positions and the speeds of an object (to be driven) with the use of pulses issued from a pulse generator which generates pulses corresponding to the amount of rotation of an output shaft of a motor. Hereinafter, an operating for obtaining the information as to the positions and the like is referred to as the "learning". When the object to be driven is operated, the above control signal is generated on the basis of the thus stored information.

For example, in case of the control system of an automatic door, the processing means thereof performs the following operations.

The door (which is an object to be driven) is not always completely closed in its initial state. Consequently, first of all, the door is driven in its closing direction at reduced speed to reach a position in which it stops. The position is hereinafter referred to as the "closed position". On the other hand, in case that the door is completely closed in its initial state, a position in which the door remains standing motionless even when it is driven in its closing direction is also referred to as the "closed position". Under such circumstances, the number of pulses accumulatively stored in the memory portion of the control system is reset to a value "zero". Then, the door is driven from such closed position in its opening direction at reduced speed. The number of pulses, which varies as the door moves in the opening direction, is accumulated. When the door stops in a position, the drive portion of the door stops in operation. Such position is hereinafter referred to as the "full-open position". The number of pulses having been accumulated until the door reaches such full-open position corresponds to a value X which is stored in the memory portion of the control system, so that the procedures of the learning are finished. After that, the automatic door operates under control of the control system on the basis of the closed position (which is represented by the value zero) and the full-open position (which is represented by the value X).

Further, in the conventional control system of the object being driven, for example, in case of the automatic door again, a reference-position detector is fixedly mounted on the door. In operation, a position of the door detected by such reference-position detector is defined as a reference position (i.e., home position) of the door. The pulses are counted between such reference position and each of the closed position and the full-open position of the door to determine the number of pulses corresponding to each of the the closed position and the full-open position of the door through the above learning. Each time the automatic door is operated (for example, each time a power switch of the door is turned on), the reference position of the door is determined through a home-position detecting operation performed by the above detector, so that the number of pulses is computed from the reference position to determine each of the closed position and the full-open position of the door, whereby the automatic door is properly controlled in operation by the conventional control system.

In the above-mentioned conventional control system, generally, a rotary encoder is employed as the pulse generator. Although it is possible for the rotary encoder to detect the amount of motion of the object being driven, such encoder can not detect an absolute position of the object. Consequently, it is necessary for the conventional control system: to use a position-detecting means (for example, such as limit switches and the like) issuing a detection signal which is stored (i.e., learned); and, to calculate the absolute position of the object based on the thus stored detection signal.

However, when the object being driven is manually moved in a condition in which the power switch of the object or door is turned off, an error is produced in position of the object in subsequent operations thereof, which prevents an actual position of the object from corresponding to a position determined on the basis of information obtained by the learning. Therefore, it is necessary for the conventional control system to conduct a learning operation for correcting such error in position of the object each time the power switch of the door or object is turned on.

Further, in case that a direction in which the object being driven moves is determined by an array of pulses, it is necessary to produce a plurality of the arrays of pulses which are different in phase from each other. However, such production of the arrays of pulses requires a complicated circuit, which increases the manufacturing cost of the control system.

Furthermore, as described above, in case that the reference-position detector is fixedly mounted on the object being driven, it is necessary to determine the home position of the object each time the power switch of the door or object being driven is turned on.

## SUMMARY OF THE INVENTION

It is an object of the present invention to provide a control system for driving an object in a proper manner. In the control system, first, motion of the object is learned to determine an absolute position of the object through information obtained by such learning. This absolute position of the object being driven is stored in a memory to eliminate the learning in subsequent operations of the object being driven, and ensures a safety operation of the object.

According to a first aspect of the present invention, the above object of the present invention is accomplished by providing:

In a control system for driving an object, comprising: a drive portion for driving the object;
a processing means which produces a signal for controlling an output of the drive portion; a memory for storing information which is required of the processing means to produce the signal; and, a variable resistor having its resistance value vary according to the output of the drive portion, the variable resistor being mechanically connected with an output shaft of the drive portion;

the improvement wherein: the processing means reads the resistance value of the variable resistor to determines an absolute position of the object on the basis of the resistance value, the absolute position being stored in the memory as one of the information.

In the control system of the present invention having the above construction, the processing means: reads the resistance value of the variable resistor which is mechanically connected with the drive portion so as to have its resistance value vary according to the output of the drive portion; and, obtains the absolute position of the object on the basis of the resistance value to store the absolute position in the memory. Consequently, in subsequent operations of the object being driven, it is possible for the control system to directly detect a current position of the object being driven on the basis of the resistance value of the variable resistor.

Further, the processing means calculates an operation speed of the object being driven on the basis of variation of the object's current position per unit time, and calculates an operation acceleration of the object on the basis of variation of the thus calculated operation speed of the object being driven.

Further, the processing means may produce a signal for controlling the drive portion on the basis of the current position of the object and the operation speed thereof.

In addition to the above fist aspect of the present invention, the object of the present invention is also accomplished according to a second aspect of the present invention by providing:

In a control system for driving an object, comprising: a drive portion for driving the object; a processing means which produces a signal for controlling an output of the drive portion; a memory for storing information which is required of the processing means to produce the signal; a variable resistor having its resistance value vary according to the output of the drive portion, the variable resistor being mechanically connected with an output shaft of the drive portion; and, a signal generator for generating a signal corresponding to an output of the drive portion, the signal generator being connected with the output shaft;

the improvement wherein:

the processing means reads the resistance value of the variable resistor to determines an absolute position of the object on the basis of the resistance value, the absolute position being stored in the memory as one of the information; and, calculates a value corresponding to the absolute position on the basis of the signal issued from the signal generator, the value being stored in the memory as one of the information.

In the control system of the present invention having the above construction, the processing means: reads the resistance value of the variable resistor to determines an absolute position of the object on the basis of the resistance value, the absolute position being stored in the memory as one of the information; and, calculates a value corresponding to the absolute position on the basis of the signal issued from the signal generator, the value being stored in the memory as one of the information.

According to the above construction, the processing means: reads the resistance value of the variable resistor which is mechanically connected with the drive portion so as to have its resistance value vary according to the output of the drive portion; and, obtains the absolute position of the object on the basis of the resistance value to store the absolute position in the memory. Consequently, in subsequent operations of the object being driven, it is possible for the control system to directly detect a current position of the object on the basis of the resistance value of the variable resistor.

On the other hand, the pulse generator connected with the drive portion issues pulses to the processing means, the number of the pulses varying according to an output of of the drive portion. On the basis of the number of the pulses, the processing means calculates a value corresponding to the absolute position of the object being driven, and stores such value in the memory.

On the basis of variation in the number of the pulses, the processing means calculates the operation speed and an operation direction of the object being driven, and establishes a proper relationship between the position of the object and such operation speed and direction thereof so as to control the object.

Further, the processing means may calculates a current position of the object on the basis of the number of the current pulses with reference to a reference position calculated on the basis of the number of the pulses having been stored in the memory.

Further, the processing means may calculates both the operation speed and the operation direction of the object on the basis of variation in resistance value of the variable resistor when it is not possible to detect the operation speed and the operation direction of the object on the basis of the number of the pulses.

According to any of the first and the second aspect of present invention, the processing means may monitor both: the control signal for controlling the drive portion; and the resistance value of the variable resistor to determine whether or not a difference in value between: the control signal for controlling the drive portion; and the resistance value of the variable resistor; is within a predetermined range. When the drive portion fails to function properly so that the object is not driven properly, such difference in value often becomes out of the predetermined range. In such case, in order to prevent the drive portion from being further damaged, the operation speed of the object being driven is controlled to be reduced so that the object is driven at reduced speed.

The processing means may determines a certain operation range of the object on the basis of the resistance value of the variable resistor. In case that the object being driven repeats its operation within another allowable operation range other than the above certain operation range, it is possible for the pressing means to automatically replace the certain operation range with the allowable operation range depending on variation in circumstances.

Even after completion of the above replacement of the operation ranges, it is possible for the processing means to check whether or not the certain operation range is still applicable to the object by operating the object in such certain operation range once every predetermined frequency of the object's operations within the allowable operation range, or every certain period of time, or at every turning-on operation of the power switch of the control system. When it is found that the certain operation range is still applicable to the object being driven, the processing means permits the certain operation range to return to the operation.

Further, on the basis of the resistance value of the variable resistor, the processing means may set two kinds of operation ranges, i.e., a full-opening operation range and a partial-opening operation range of the object being driven. In case that these kinds of the operation ranges are stored in the memory, the processing means detects a variation in a detection range for determining an operation of the object on the basis of a detection signal issued from a detection means, and determines whether the object being driven is controlled within the full-opening operation range or the partial-opening operation range. On the thus determined operation range of the object being driven, the processing means may control the drive portion.

Further, in case that the processing means has the memory store the detection signal issued from the detection means (which detects the variation in the detection range for determining the operation range of the object being driven) as a start signal for permitting the object to be driven, the processing means may determine whether the object being driven is operated within the full-opening operation range or the partial-opening operation range, on the basis of a predetermined threshold value as to the number of the start signals having been stored in the memory per a unit time, and may control the drive portion on the basis of the thus determined operation range.

As described above, according to the present invention, it is possible: to convert the resistance value of the variable resistor into the output of the drive portion by connecting the output shaft of the drive portion with the variable resistor; and, to store in the memory a range of the resistance value corresponding to the operation range of the object being driven so as to permit the position of the object to be determined as its absolute position in the subsequent operations of the object. Consequently, even when some trouble such as a power failure occurs, it is possible for the control system of the present invention to detect the position of the object without any error, and to control the object in a precise and a safety manner in operation.

## BRIEF DESCRIPTION OF THE DRAWINGS

Fig. 1 is a block diagram of an essential construction of the control system of a first embodiment of the present invention;

Fig. 2 is a part of a flowchart for showing the stroke learning operation performed in the first embodiment of the present invention;

Fig. 3 is the remaining part of the flowchart shown in Fig. 2;

Fig. 4 is a view showing a relationship between a potentiometer and the door's stroke;

Fig. 5 is an analog differentiating circuit or analog differentiator;

Fig. 6 is a block diagram of a concrete construction of the first embodiment of the present invention;

Fig. 7 is a flowchart showing the processing procedures for detecting the operation speed and the operation acceleration of the object being driven, the procedures being performed in the processing means;

Fig. 8 is a block diagram of an essential construction of a second embodiment of the control system of the present invention;

Fig. 9 is a block diagram of a concrete construction of the second embodiment of the present invention;

Figs. 10(a), 10(b) and 10(c) are views illustrating constructions of means for controlling the operation speed of the object being driven and control signals for such control;

Fig. 11 is a graph illustrating the operation of the object or door controlled by the control system of the present invention, with respect to the position and the velocity of the object or door being driven;

Fig. 12 is a graph illustrating the procedures for determining the baking position of the object or door;

Fig. 13 is a graph illustrating how the operation range of the object or door is changed;

Fig. 14 is flowchart showing the processing procedures for changing the operation range of the object or door being driven;

Fig. 15 is a block diagram of a first example of the control system for performing the full-/partial-opening operation of the object or door being driven;

Fig. 16 is a block diagram of a second example of the control system for performing the full-/partial-opening operation of the object or door being driven;

Fig. 17 is a graph illustrating the operation speed or velocity of the object or door with the potentiometer's position voltage value; and

Fig. 18 is a block diagram a construction of the control system for control the object or door which operates in a manner shown in Fig. 17.

## DESCRIPTION OF THE PREFERRED EMBODIMENTS

Hereinbelow, the present invention will be described in detail with reference to the drawings.

An essential construction of a first embodiment of a control system $S_1$ of the present invention is shown in a block diagram of Fig. 1.

As shown in Fig. 1, the control system $S_1$ comprises: a motor 3 and a motor driver 4 both of which form a drive portion of the control system; a processing means 6; a memory 7; and a variable resistor (i.e., potentiometer) 8.

An object 1 being driven is driven by the motor 3 through a speed-reduction mechanism 2. An output (i.e., the amount of rotation) of the motor 3 is determined by the motor driver 4 as follows:

An output shaft of the motor 3 is mechanically connected with the potentiometer 8 through the speed-reduction mechanism 2, so that a resistance value of the potentiometer 8 varies according to the output of the motor 3.

The processing means 6 detects a position of the object 1 upon receipt of a voltage (which is proportional to a resistance value of the potentiometer 8) at its analog-to-digital converting terminal which will be hereinafter referred to as the $(A/D)_1$ terminal. In operation, first of all, the position of the object 1 having been detected by the resistance value of the potentiometer 8 is stored in the memory 7. An operation for obtaining some information as to a reference position of the object 1 will be hereinafter referred to as the "stroke learning operation".

Processing procedures of such stroke learning operation are shown in a flowchart of Figs. 2 and 3, in which the object 1 is a door of an automatic door.

The processing procedures shown in the flowchart and performed in the processing means 6 is as follows:

In a first step ST1 of the flowchart, any of the present voltage value input (i.e., the present value of the potentiometer 8) $P_n$, a value $P_{n-1}$ of the potentiometer 8 in a previous cycle, and variable m (which is the number of operations repeated for confirming the door stop) is reset.

In a step ST2 subsequent to the step ST1, the door is driven in its opening direction at reduced speed.

In a step ST3 subsequent to the step ST2, the value $P_n$ is stored in the memory 7.

In a step ST4 subsequent to the step ST3, a variation " $\Delta P_n$" in value of the potentiometer 8 is determined by subtracting the value $P_n$ from the value $P_{n-1}$.

In a step ST5 subsequent to the step ST4, the absolute value of the $\Delta P_n$ (i.e., $|\Delta P_n|$ ) is com-

pared in amount with a maximum variable k of the potentiometer 8. In case that the absolute value of the $\Delta P_n$ is larger than the variable k, it is judged that the door is still under operation, and the processing procedures go to a step ST9. When the absolute value of the $\Delta P_n$ is equal to or smaller than the variable k, the processing procedures go to a step ST6.

In the step ST6, the variable m is subtracted by "1" to become a variable "m - 1").

In a step ST7 following the step ST6, it is judged whether the variable m becomes a value "zero". When it is judged that the variable m becomes the value "zero", the door is recognized to be in an open condition so that the processing procedures go to a step ST10. When the variable m is not "zero", the processing procedures go to a step ST9 in which the value $P_n$ becomes a new value $P_{n-1}$, and the processing procedures return to the step ST3.

In the step ST10, the value $P_n$ at a time when the variable m is "zero" is stored in the memory 7 as an open position of the door.

In a step ST11 following the step ST10, the variable m is reset again, so that the processing procedures go to the following step ST12 in which the door is driven in its closing direction at reduce speed.

In a step ST13 following the step ST12, the value $P_n$ is stored in the memory 7, and the processing procedures go to the following step ST14 in which the variation " $\Delta P_n$" in value of the potentiometer 8 is determined by subtracting the value $P_n$ from the value $P_{n-1}$.

In a step ST15 following the step ST14, the absolute value of the variation " $\Delta P_n$" is compared again in amount with the maximum variable k. When the former (i.e., the absolute value) is larger than the latter (i.e., the variable k), it is judged that the door is still under operation, so that the processing procedures go to a step ST19 in which the value $P_n$ becomes a new value $P_{n-1}$, whereby the processing procedures return to the step ST13.

When the absolute value is equal to and smaller to the variable k, the processing procedures go to a step ST16 in which the variable m is subtracted by "1" to become a variable "m - 1".

Then, the processing procedures go to the following step ST17 in which it is judged whether the variable m becomes the vale "zero". When it is judged that the variable m becomes "zero", the door is recognized to be in a closed condition, so that the processing procedures go to a step ST18 in which the door drive stops. When the variable m is not "zero", the processing procedures go to the step ST19 in which the value $P_n$ becomes a new value $P_{n-1}$. Then, the processing procedures return to the step ST13.

In a step ST20 following the step ST19, the value $P_n$ at a time when the variable m is equal to "zero" is stored in the memory 7 as a closed position of the door so that the stroke learning operation is finished.

According to the above-described stroke learning operation, both the full-open position and the closed position of the object 1 such as the door and the like are obtained as the reference positions indicated by the values of the potentiometer 8. In the subsequent operations, an input value to the $(A/D)_1$ terminal of the processing means 6 shows a voltage value corresponding to a current or present position of the object 1 being driven.

Actually, through the above stroke learning operation, each of voltage values $P_{open}$ and $P_{close}$ of the potentiometer 8 at each time when the door is opened and closed is determined, in which the value $P_{close}$ is smaller than the value $P_{open}$. When a constant "$\alpha$" for converting the voltage into a length is introduced, a door stroke L is represented by the following equation (1):

$$L = \alpha (P_{open} - P_{close}) \quad (1)$$

Consequently, when the closed position and the open position of the door are represented by values "0" and "1" respectively and the current position of the door is represented by a value N, the value N is represented by the following equation (2) with the use of the voltage value $P_n$ of the current position:

$$N = \alpha(P_n - P_{close}) / L$$
$$= (P_n - P_{close}) / (P_{open} - P_{close}) \quad (2)$$

where $0 \leqq N \leqq 1$ (N represented by the above equation becomes an absolute position).

As shown in Fig. 4, when the potentiometer 8 has a range of its effective angle of rotation (which ranges, for example, from 0° to 320°) correspond to a value of at least 2L, and has its intermediate distributing terminal, or its contact shoe (i.e., slider) set at a mid-point (for example, at a point of 160°) within the range of the effective angle of rotation at a time when the control system is mounted on the site, it is possible in operation to have any position of the door represented by an angle within the range of such effective angle of rotation.

Incidentally, the potentiometer 8 may be one having a larger range of the effective angle of rotation (for example, ranging from 0° to at least 720°), or may be of a linear-slide type. In each of these ones, the intermediate distributing terminal, or the contact shoe (i.e., slider) thereof may be set at a mid-point of the range of the effective angle of rotation, or may be set at a mid-point of a linear-slide stroke.

In Fig. 1 again, the present position voltage value $P_n$ is received by a differentiator 9 which is connected to the potentiometer 8 in parallel with the processing means 6. In the differentiator 9, the value $P_n$ is converted into a rate of position-variation/unit-time of the object 1, and issued therefrom as a speed voltage value to an analog-to-digital converting terminal (hereinafter referred to as the $(A/D)_2$ terminal) of the processing means 6.

The speed voltage value is also received by a differentiator 10 which is connected to the differentiator 9 in parallel with the processing means 6. In the differentiator 10, the speed voltage value is converted into a rate of speed/unit-time of the object 1, and issued therefrom as an acceleration voltage value to an analog-to-digital converting terminal (hereinafter referred to as the $(A/D)_3$ terminal) of the processing means 6.

A concrete construction of each of the differentiators 9, 10 is shown in Fig. 5.

As shown in Fig. 5, the position voltage value of the object 1 obtained by the potentiometer 8 is transmitted to a delay element 9b through a buffer 9a, and then, after a predetermined time delay, further transmitted to an adder 9d through a buffer 9c. The adder 9d produces a difference signal representing a difference between the thus delayed signal and an undelayed signal which is directly transmitted to the adder 9d from the the buffer 9a by passing the delay element 9b and the buffer 9c. Such difference signal is then amplified by an amplifier 9e to become a speed signal (i.e., the speed voltage value) of the object 1 being driven.

The speed signal is transmitted to a delay element 10a, and then, after a predetermined time delay, further transmitted to an adder 10c through a buffer 10b. The adder 10c produces a difference signal representing a difference between the thus delayed signal and an undelayed signal which is directly transmitted to the adder 10c from the the amplifier 9e by passing the delay element 10a and the buffer 10b. Such difference signal is then amplified by an amplifier 10d to become an acceleration signal (i.e., the acceleration voltage value) of the object 1 being driven.

The processing means 6 shown in Fig. 1 produces a control signal on the basis of: the reference position obtained from the stroke learning operation; the present position value, speed value and the acceleration value which are inputted to the $(A/D)_1$, $(A/D)_2$ and the $(A/D)_3$ terminal of the processing means 6, respectively. The thus produced control signal is transmitted to the motor driver 4 through the control-signal converter portion 5 to have the motor driver 4 actuate the motor 3, so that the object 1 is operated.

A concrete circuit construction of the control system S of the first embodiment of the present invention is shown in Fig. 6. Like reference numerals and characters apply to similar parts throughout Figs. 1 and 6.

The processing means 6 shown in Fig. 6 employs: a gear train 2' in place of the speed-reduction mechanism 2 shown in Fig. 1; a motor 3 provided with an over-load detecting temperature sensor 3' in place of the motor 3 shown in Fig. 1; a power transistor 4' in place of the motor driver 4 shown in Fig. 1; a photocoupler 5' (which is electrically insulated from the power transistor 4') in place of the control-signal converter portion 5; a CPU 6' in place of the processing means 6; and, a non-volatile memory (NVRAM) 7' in place of the memory 7 shown in Fig. 1.

For example, an input-control portion for controlling an input issued from an external switch such as a control switch for instructing a start of operation of the automatic door is connected with the CPU 6' through a photocoupler 14. Further connected with the CPU 6' are: switches 15 for manually performing various setting operations such as one for setting a learning mode; a setting unit 16 for setting various set values; a buzzer 17 for giving an alarm to the user; and, an LED display 18.

According to the processing procedures shown in a flowchart of Fig. 7, the control system shown in Fig. 6 calculates the speed and the acceleration of the object 1 by the use of the CPU 6' not by the use of the analog-type differentiators 9, 10 shown in Fig. 5.

Namely, as shown in Fig. 7,

in a step ST21 of the flowchart, the position voltage value $P_{n-1}$ of the potentiometer 8 is read and stored;

in a step ST22 subsequent to the step ST21, the processing procedures wait for a variation in position/unit-time of the object 1 being driven;

in a subsequent step ST23, the thus varied position voltage value $P_n$ is read and stored;

in a subsequent step ST24, a difference "$\Delta P_n$"between the above two kinds of the position voltage values is calculated by subtracting the value $P_n$ from the value $P_{n-1}$;

in a subsequent step ST25, the $\Delta P_n$ is multiplied by a constant "$\beta$" to make a speed (i.e., velocity) $v_{n-1}$ of the object 1 being driven;

in a subsequent step ST26, the value $P_n$ becomes a new value $P_{n-1}$;

in a subsequent step ST27, the processing procedures wait for a variation in position/unit-time of the object 1 being driven;

in a subsequent step ST28, the thus varied position voltage value $P_n$ is read and stored;

in a subsequent step ST29, a difference "$\Delta P_n$"between the above two kinds of the position voltage values is calculated by subtracting the val-

ue $P_n$ from the value $P_{n-1}$;

in a subsequent step ST30, the $\Delta P_n$ is multiplied by a constant "$\beta$" to make a speed $v_n$ of the object 1 being driven;

in a subsequent step ST31, a difference " $\Delta P_n$"between the above two kinds of the speed voltage values is calculated by subtracting the value $v_n$ from the value $v_{n-1}$;

in a subsequent step ST32, the $\Delta v_n$ is multiplied by a constant "r" to make an acceleration "$a_n$" of the object 1 being driven;

in a subsequent step ST33, the value $P_n$ becomes a new value $P_{n-1}$;

in a subsequent step ST34, the value $v_n$ becomes a new value $v_{n-1}$;

in a subsequent step ST35, the processing procedures wait for a variation in position/unit-time of the object 1 being driven; then

the processing procedures return to the step ST28; and, in subsequent operations, the processing procedures repeat the calculation of the acceleration of the object 1 in the same manner as that described above.

As described above, both the operation speed and the operation acceleration of the object 1 being driven are calculated.

Fig. 8 shows a block diagram illustrating an essential construction of the control system $S_2$ of a second embodiment of the present invention.

The control system $S_2$ comprises: the drive portion constructed of both the motor 3 and the motor driver 4; the processing means 6; the memory 7; and, the variable resistor (i.e., the potentiometer) 8.

In the control system $S_2$, the object 1 being driven is driven by the motor 3 an output (i.e., the amount of rotation) of which is determined by the motor driver 4.

The control-signal converter portion 5 converts a control signal (which is issued from the processing means 6) into a predetermined signal, and issues such predetermined signal to the motor driver 4. The output shaft of the motor 3 is mechanically connected with the potentiometer 8 through the speed-reduction mechanism 2, so that a resistance value of the potentiometer 8 varies according to the output of the motor 3.

The processing means 6 stores a voltage value (which is proportional to the resistance value of the variable resistor 8) to detect a position of the object 1 being driven.

In the beginning of operation of the control system $S_2$, the processing means 6 detects a reference position of the object 1 within its operation range through the "stroke learning" operation described above, and stores the reference position in the memory 7, which enables the processing means 6 to detect the absolute position of the object 1 on the basis of the above voltage value during subsequent operations.

The output shaft of the motor 3 is further connected with a pulse generator 11 (which is denoted also by the reference character "FG" in Fig. 8) to enable the generator 11 to issue pulses to the processing means 6, the pulses being proportional to a rotational speed of the motor 3, i.e., proportional to the operation speed of the object 1 being driven.

On the basis of the thus obtained absolute position and the operation speed of the object 1 being driven, the processing means 6 produces the control signal for controlling the object 1.

Fig. 9 shows a concrete circuit construction of the control system $S_2$ of the second embodiment shown in Fig. 8.

The control system $S_2$ employs: a reduction gear 2' in place of the speed-reduction mechanism 2 shown in Fig. 1; the motor 3 provided with an over-load detecting temperature sensor 3'; a power transistor 4' in place of the motor driver 4 shown in Fig. 1; a speed-control circuit 5' for controlling the operation speed of the object 1, in place of the control-signal converter portion 5 shown in Fig. 1; the CPU 6' in place of the processing means 6 shown in Fig. 1; and, a non-volatile memory (NVRAM) 7' in place of the memory 7 shown in Fig. 1. The speed-control circuit 5' is constructed of a phase comparator 12 and a pulse-width modulator 13.

Now, a control operation in operation speed of the object 1 being driven will be described hereinbelow with reference to Figs. 10(a), 10(b) and 10-(c), the control operation being performed by both the phase comparator 12 and the pulse-width modulator 13.

As shown in Fig. 10(a), the pulses issued from the pulse generator (FG) 11 are received by the phase comparator 12 together with reference pulses issued from the CPU 6'.

The number of the reference pulses issued from the the CPU 6' varies according to the operation speed of a target, i.e., of the object 1 being driven.

The phase comparator 12 compares the above two kinds of the pulses with each other. In a condition in which the number of the pulses issued from the pulse generator 11 is larger than that of the reference pulses, the phase comparator 12 issues a signal from its positive (+)-side output terminal. In a condition reverse to the above, the phase comparator 12 issues a signal from its negative (-)-side output terminal. When the above two kinds of the pulses are the same in the number of the pulses, the phase comparator 12 issues no signal from any of its output terminals.

The signal issued from the above positive (+)-side output terminal makes a transistor $Q_1$ conductive, while the signal from the negative (-)-side output terminal makes a transistor $Q_2$ conductive. When the transistor $Q_1$ on the positive (+)-side becomes conductive, a capacitor C is charged with a current passing through a resistor R to issue a high-tension (i.e., high-voltage) signal $V_{Ref1}$ from its terminal. On the other hand, When the transistor $Q_2$ on the negative (-)-side becomes conductive, the capacitor C permits a current to flow out therefrom through the resistor R so that a low-tension (i.e., low-voltage) signal $V_{Ref2}$ is issued from the terminal of the capacitor C.

As shown in Fig. 10(b), a motor drive pulse issued from the CPU 6' is modulated in the pulse-width modulator 13 (shown in Fig. 9) to become a pulse $V_1$ (which has a relatively narrow pulse width) or a pulse $V_2$ (which has a relatively wide pulse width).

As shown in Fig. 10(c), the thus modulated pulse is applied to a base of the power transistor 4'. Consequently, a period of time when the power transistor 4' is conductive varies according to the pulse width of the drive pulse applied to the base of the power transistor 4'. Namely, in case that the pulse $V_1$ is applied, the period of time when the power transistor 4' is conductive is reduced. On the other hand, in case that the pulse $V_2$ is applied, such period is increased.

The rotational speed of the motor 3 varies according to the period of time when the power transistor 4' is conductive, so that the number of the pulses issued from the pulse generator 11 also varies according to the rotational speed of the motor 3 to become the same as that of the reference pulses.

The rotational speed of the motor 3 is controlled in a manner as described above, so that the target operation speed of the object 1 being driven is obtained.

Further, in the embodiment shown in Fig. 9, the CPU 6' receives through the photocoupler 14 the signals issued from various kinds of external switches (which instruct a start of operation of the automatic door and the like). Connected with this CPU 6' are: the switches 15 for manually performing the various kinds of control operations such as the setting operation of the learning mode; the setting unit 16 for setting the various kinds of the set values required of the control system in operation; the buzzer 17 for giving an alarm to the the user; and, the LED display 18.

Fig. 11 shows a graph illustrating the operation of the automatic door on the basis of the position and the speed of the object 1 both of which are obtained by the control system of the present invention in a manner described above when the automatic door is employed as the object 1 being driven. In the graph, the horizontal axis shows the position of the automatic door, and the vertical axis indicates the speed, i.e., velocity of the door.

As shown in Fig. 11, the velocity or speed of the door is defined as to be positive when the door moves in its closing direction. On the other hand, the position of the door is defined as to be: a value "0 (zero)" in the closed position of the door; and, a value "1" in the open position of the door. In operation, the door is accelerated in a range of its stroke between the closed position "0" and the open position "1" toward the open position "1" to reach an acceleration-end point A (which is a constant-velocity start point). From the point A, the door moves at a constant velocity toward its open position to reach a deceleration-start point B. After the door reaches its open position. the door is accelerated again toward its closed position to reach an acceleration-end point C (which is a constant-velocity start point). From the point C, the door moves at a constant velocity toward its closed position to reach a deceleration-start point D. These points A, B, C and D are determined through a plurality of trial operations of the door (hereinafter referred to as the "operation learning"). After that, the door is automatically controlled in operation on the basis of the thus determined points A, B, C and D, as shown in Fig. 11.

Fig. 12 shows procedures of the operation learning for determining, for example, the deceleration-start point D (i.e., braking start point) encircled with a dotted line F in Fig. 11, in case that the door is closed. Each of the remaining points A, B and C may be determined in the same manner as that of the above.

In the graph shown in Fig. 12: the reference character "$v_T$" denotes a reduced-speed of the door in its closing operation; "$N_T$" a target speed-reduction point of the door; "$D_1$" a first braking start point in a first trial operation 1*; "$N_1$" a first speed-reduction point; "$D_2$" a second braking start point in a second trial operation 2*; "$N_2$" a second speed-reduction point; ...; "$D_n$" the n'th braking start point; ...; "$N_n$" the n'th speed-reduction point in the n'th trial operation n*; and, the like. When a difference value calculated by subtracting in value the "$N_T$" from the "$N_1$" is represented by the reference character "$\epsilon_1$", and a tolerance in the target speed-reduction point "$N_T$" is represented by the reference character "$\delta$" defined by the following equation (3):

$$\epsilon_1 > \delta \qquad (3),$$

the second braking start point "$D_2$" is moved toward the target speed-reduction point "$N_T$" by a distance of less than the difference value "$\epsilon_1$".

After that, the second trial operation 2* is conducted, so that a difference value "$\epsilon_2$" is obtained as a difference between the second speed-reduction point "$N_2$" and the target speed-reduction point "$N_T$", whereby the "$\epsilon_2$" is compared with the tolerance "$\delta$" in the same manner as that defined by the above equation (3).

The above trial operations are repeated. A difference between the n'th speed-reduction point "$N_n$" (which is obtained through the n'th trial operations n*) and the target speed-reduction point "$N_T$" is defined as a difference value "$\epsilon_\eta$" calculated by subtracting the "$N_T$" from the "$N_n$" The n'th braking start point "$D_n$" at a time when the difference value "$\epsilon_\eta$" satisfies the following equation (4):

$$\epsilon_\eta \geqq \delta \qquad (4),$$

is determined as the braking start point "D", and stored in the non-volatile memory (NVRAM) 7', whereby the operation learning is finished.

By conducting the same operation learning, each of the acceleration-end points A, C and the deceleration-start point B (any of which is described in the above) may be determined. Therefore, based on the thus determined points A, B, C and D, the object 1 being driven may be properly controlled in operation.

Even when the potentiometer 8 is in trouble to fail to directly detect the absolute position "N" of the object 1 or door, it is possible to determine such absolute position "N" as follows:

First, the CPU 6' calculates the present position voltage value "$P_n$" according to the following equation (5) which defines the relationship between the value Pn and an equation as to the number of the pulses issued from the pulse generator:

$$Pn = (P_{open} - P_{close})\ \sigma_n / \sigma_{max} + P_{close} \qquad (5)$$

where: $\sigma_{max}$ is a calculated pulse value of the full-open position of the door the closed position of which is indicated by the value "0 (zero)", the $\sigma_{max}$ corresponding to the counted value "X" in the step ST58 of the learning procedures of the prior art described above; and, $\sigma_n$ has its range defined by an equation of $0 \leqq \sigma_n \leqq \sigma_{max}$, and is a variable representing a calculated pulse value corresponding to an arbitrary position of the door or object 1.

As a result, based on the thus calculated value Pn and the equation (2) already described above, the absolute position "N" of the object 1 or door is determined, whereby the control system of the present invention may continue to control the operation of the object 1 or door in a manner as defined by the above operation learning.

In case that the pulse generator 9 is in trouble to fail to directly detect the operation seed of the door, the CPU 6' calculates the operation speed according to the procedures shown in Fig. 7 based on the position voltage value of the door determined by the potentiometer 8, whereby the control system of the present invention may continue to control the operation of the door or object 1.

In the control system of the present invention, the processing means 6 may monitor the operation acceleration of the object 1 (which adversely affects the object 1 in operation) to ensure the object 1 a predetermined safety drive even when a shock on the object 1 or door in operation tends to prevent such safety drive. For example, when the automatic door is controlled in operation and an abnormal shock on the door is detected in a condition in which the door is driven in its opening direction, the control system of the present invention immediately stops the door and keeps it motionless for a predetermined period of time. Under such circumstances, when a start signal is inputted to the processing means 6 during the predetermined period of time, the door is driven in its full-opening direction at reduced speed. On the other hand, there is no start signal inputted in the same condition as that of the above, the door is closed at reduced speed. When an abnormal shock on the door is detected in a condition in which the door is driven in its closing direction, the door is immediately reversed in drive direction so that a safety drive of the door is ensured.

Further, in order to take measures against troubles of the control system of the present invention in its drive train, the processing means 6 monitors a difference between a control signal (which is issued to the drive portion) and the voltage value (which is indicated by the potentiometer 8) on the basis of threshold values having set in the setting unit 15. When some trouble is detected, the processing means 6 switches the door's drive from a normal-speed drive to a reduced-speed drive to keep the damage of the drive train at minimum.

Further, in case that the door or object 1 is forcibly driven with external forces several times (the number of which times is predetermined) with an operation stroke different from a current operation stroke determined in the previous stroke leaning, the control system of the present invention permits the current operation stroke to be automatically replaced with this forcibly applied operation stroke.

Fig. 13 shows a graph illustrating a replacement or renewal of the operation stroke of the door encircled with a dotted line G of Fig. 11, where the operation speed of the door is defined to be positive in the door's opening direction.

In case that the door is operated in the operation stroke previously determined through the operation learning, the door is moved in its opening direction at a constant velocity or speed. Then, at the braking point B, the braking operation of the door starts so that the operation speed of the door reaches a reduced constant speed $V_{os1}$ at a braking point B1. After that, at a braking point B2, the braking operation starts again so that the operation speed of the door reaches a stopping speed $V_{osF}$ at a braking point B3, and then the door stops at a point B4 at which the door is completely opened.

In connection with Fig. 13, an operation path of the door represented by the remaining braking points TB, TB1, TB2, TB3 and TB4 shows the renewed operation stroke of the door. Namely, in the renewed operation stroke, a braking operation of the door starts at the braking point TB, so that the operation speed of the door reaches a reduced constant speed $V_{os1}$ at a braking point TB1. After that, at a braking point TB2, the braking operation starts again so that the operation speed of the door reaches a stopping speed $V_{osF}$ at a braking point TB3, and then the door stops at a point TB4 at which the door is completely opened.

Fig. 14 shows a flowchart illustrating the processing procedures performed in the CPU 6' for determining the above braking points TB, TB1, TB2, TB3 and TB4 required for the above renewal (i.e., replacement) of the operation stroke (i.e., operation range) of the door.

In the flowchart shown in Fig. 14:

first, in a step ST51, the door is driven in its opening direction at the constant reduced speed $V_{os1}$;

in a subsequent step ST52, it is judged whether or not the door reaches the point B2. In case that the door does not reach the point B2, the processing procedures go to the following step ST53. On the other hand, in case that the door reached the point B2, the processing procedures go to a step ST59;

in the subsequent step ST53, it is judged whether or not the operation speed of the door is rapidly reduced. When the operation speed is not reduced, the processing procedures return to the step ST51 so that the door continues to be driven at the reduced speed $V_{os1}$. On the other hand, when the operation speed of the door is rapidly reduced, the processing procedures go to the following step ST54;

in the step ST54, it is judged whether or not a difference "1 - $N_n$" between the full-open position "1" and the current position "$N_n$" of the door is within a tolerance. When the difference is not within the tolerance, the processing procedures go to the following step ST55. On the other hand, when the difference is within the tolerance, the processing procedures go to a step ST56 subsequent to the step ST55;

in the step ST55 subsequent to the step ST54, a safety stop processing routine for taking a measure against the trouble of the door is performed;

in the step ST56 subsequent to the step ST54, a value "1" is added to a counter CNT which counts the number of rapid speed-reduction operations of the door having been repeatedly performed;

in a step ST57 subsequent to the step ST56, it is judged whether or not the above number of the rapid speed-reduction operations of the door having been counted by the counter CNT reaches a predetermined number M. when it reaches the number M, the processing procedures go to the following step ST58. On the other hand, when it does not reach the number M, the processing procedures go to a step ST61;

in the step ST58 subsequent to the step ST57, based on the difference "1 - $N_n$" between the full-open position "1" and the current position "$N_n$" of the door, the renewed (i.e., replaced) points TB, TB1, TB2, TB3 and TB4 (which correspond to the points B, B1, B2, B3 and B4, respectively) are determined and stored in the memory 7; then,

the processing procedures go to the step ST61 described above, and subsequent operations of the door continue to be controlled in the thus renewed (i.e., replaced) operation stroke or range thereof;

in the step ST59 subsequent to the step ST52, after the door reaches the point B3, the door is driven at the stopping speed or velocity $V_{osF}$; and

in a step ST60 subsequent to the step ST59, it is judged whether or not the door reaches the full-open position B4 on the basis of its operation speed v. when the operation speed v is not equal to a value "0 (zero)", the processing procedures return to the step ST59, so that the door continues to travel in its opening direction at the operation speed $V_{osF}$. On the other hand, when the operation speed v of the door is equal to the value "0 (zero)", the processing procedures go to the step ST61, so that the current operation stroke (i.e., operation range) of the door having been determined through the previous operation learning is not renewed (i.e., not replaced with a new operation stroke), whereby subsequent operations of the door continue to be controlled in the current operation stroke.

Further, in the control system of the present invention, when the subsequent operations of the door are controlled in the renewed or replaced operation stroke (i.e., operation range), it is possible for the control system to check whether or not the previous operation range or stroke is still applicable to the door by operating the door in the previous operation stroke (which is one not renewed) once every predetermined frequency of the door's operations performed within the renewed or replaced operation range or stroke of the door, or every certain period of operation time, or at every turning-on operation of the power switch of the control system of the door. Through the above checking operation of the control system, when it is found that the previous operation range or stroke is still applicable to the door, the current (i.e., renewed) operation range or stroke is replaced again with the previous one to permits the subsequent operations of the door continue to be controlled in the previous operation range or stroke.

As described above, it is possible for the control system of the present invention to control the operation of the door or object 1 in a safety manner.

In addition, it is further possible for the control system of the present invention to control the operation of the object 1 within any of arbitrary operation ranges or strokes (hereinafter referred to as the "partial-opening operation ranges or strokes"). Any of the partial-opening operation ranges: is narrower than the full-opening operation range or stroke of the door determined through the stroke learning operation described above; is set at a resistance value of the variable resistor 8; and, is stored in the memory 7.

Fig. 15 shows a block diagram illustrating a construction of the control system of the present invention for controlling the automatic door which operates within the above-mentioned two kinds of the operation ranges or strokes.

As shown in Fig. 15, a detection portion 19 is connected with the control system S to detect variation of its detection areas both in amount and in direction, and selects based on a predetermined threshold value any one of: an instruction $P_x$ (i.e., a full-opening operation start signal of the door) for controlling the operation of the door in the full-opening operation range or stroke; and, an instruction $P_H$ (i.e., a partial-opening operation start signal) for controlling the operation of the door in the partial-opening operation range or stroke, so that the thus selected instruction is issued as an instruction signal from the detection portion 19 to the processing means 6. When the instruction signal is the above instruction $P_x$, the processing means 6 issues the full-opening control signal on the basis of the full-opening operation range or stroke stored in the memory 7. On the other hand, when the instruction signal is the instruction $P_H$, the processing means 6 issues a partial-opening control signal on the basis of the partial-opening operation range or stroke stored in the memory 7.

Fig. 16 shows a block diagram illustrating an alternative construction of the control system of the present invention for controlling the automatic door which operates within the above-mentioned two kinds of the operation ranges or strokes.

A detection portion 19' issues a start signal (which is required to have the processing means 6 start its controlling operation as to the automatic door) to the processing means 6 which counts the number of the starts signals per predetermined unit time, the number being defined as a frequency of the start signals. When Such frequency is equal to or larger that the predetermined threshold value, the processing means 6 issues a control signal for the full-opening operation range or stroke stored in the memory 7. On the other hand, when the frequency is smaller than the threshold value, the processing means 6 issues a control signal for the partial-opening operation range or stroke.

As described above, according to the variation of the detection areas detected by the detection portion 19', the operation of the object 1 such as the automatic door and the like is automatically controlled within the full-/partial-opening operation ranges or strokes, so that energy loss in air-conditioning is minimized in this case in contrast with a condition in which the operation of the object 1 is controlled always within the full-opening operation range or stroke.

Each of the detection portions 19, 19' is preferably constructed of a detection unit disclosed in Japanese Patent Publication No. Hei 2-747 (published in 1990). It is possible for such detection unit to detect a variation in image per unit time on a screen (which represents the conditions of the detection areas), and to issue a detection signal corresponding the amount of such variation, which amount is hereinafter referred to as the "variation value".

In case that such detection unit is used as the detection portion 19 (shown in Fig. 15) in the control system of the present invention, an area in which the automatic door is installed is defined as the detection area, and a variation in the number of the users passing through such detection area per unit time is defined as a variation value (i.e., traffic value) P. Under such circumstances, when the traffic is heavy, the operation of the automatic door is controlled within the full-opening operation range or stroke. On the other hand, when the traffic is light, the operation of the door is controlled within the partial-opening operation range or stroke. In order to select one of the above two kinds of the operations ranges or strokes, there are provided a pair of predetermined threshold values $P_1$, $P_2$, provided that the value $P_1$ is larger than the value $P_2$. Consequently, the detection unit employed as the detection portion 19 may issue a full-opening operation start signal when the value P is equal to or larger than the value $P_1$. On the other hand, the detection unit may issue a partial-opening operation start signal when the value P ranges from at least the value $P_2$ up to the value $P_1$.

On the other hand, in case that the detection unit is used as the detection portion 19' (shown in Fig. 16), the detection unit is so constructed as to issue the start signal when the traffic value P is equal to or larger than the threshold value having the processing means 6 control the operation of the automatic door within the partial-opening operation range or stroke. Since the detection unit or portion 19' has the above construction, it is possible for the processing means 6 to control the operation of the door within the partial-opening operation range or stroke when the frequency of the start signals issued from the detection portion 19' is smaller than the predetermined value, and to control the operation of the door within the full-opening operation range or stroke when the frequency of the start signals issued from the detection portion 19' is equal to or larger than the predetermined value.

Fig. 17 is a similar view to Fig. 11, illustrating the operation of the door or object 1 being driven, where the horizontal axis shows a resistance value of the potentiometer 8 corresponding to a position of the door or object 1 being driven.

As shown in Fig. 17, in case that the door or object 1 being driven is closed in its initial state, in operation, the object 1 is accelerated in a range of from its closed position O (which corresponds to a resistance value $R_o$) to a point A' (which corresponds to a resistance value $R_A$) to reach the point A' from which the object 1 is driven at a constant speed or velocity to reach a point B' (which corresponds to a resistance value $R_B$) from which the object 1 is decelerated to reach a position F (open position) at which the object 1 stops. On the other hand, in case that the object 1 or door is opened in its initial state, in operation, the object 1 is accelerated in a range of from its open position F to its constant-speed start point to reach such such constant-speed start point from which the object 1 is driven at a constant speed or velocity to reach its constant-speed end point from which the object 1 or door is decelerated to reach its closed position O at which the object 1 or door stops.

Incidentally, the open position F is determined through the above-mentioned stroke learning operation when the control system of the present invention starts to control the operation of the door. Points A and B (which are within the operation stroke of the door or object 1 being driven) correspond to the points A' and B', respectively. Such points A, B are determined through the operation learning described above.

The operation of the door or object 1 being driven is controlled based on the absolute position obtained through the above equation (2) within the entire operation range of the object 1. In operation, it is often required to control the operation of the object 1 or door in a special manner.

For example, in case of the automatic door, the user often tries to pass through the door even when the door starts its closing operation from its open position. In this case, when the detection portion (19, 19') detects the user passing through the door, the detection portion (19, 19') issues a start signal to the control system S to have the door driven in a direction (i.e., opening direction) counter to the current operation direction (i.e., closing direction) of the door through a direction-reversing operation. Each time such direction-reversing operation is conducted, a position at which the operation of the door is reversed in direction (i.e., the door starts its closing operation) often varies together with its operation speed.

On the other hand, in case that the door starts its opening operation through the above direction-reversing operation, it is also preferable to open the door in a manner illustrated in the graph of Fig.17, particularly in the vicinity of the open position of the door as to the door's deceleration conditions.

However, since a position at which the operation of the door is reversed in direction varies, the braking start points B' shown in Fig. 17 also varies in position, which makes it difficult to properly control the operation of the door after completion of the direction-reversing operation.

More particularly, in case that the door starts its operation in its closing direction from the open position F and then performs its direction-reversing operation, the door is accelerated in its opening direction from a reversing position (at which the operation direction of the door is reversed). Consequently, the more the reversing position approaches the open position F (or, the more the opening speed increases), the more the door should be quickly decelerated. However, in the prior art, there is no criterion for the acceleration-end point and the deceleration-start point of the door after completion of the direction-reversing operation. Consequently, heretofore, in practice, the braking operation of the door starts at a fixed position (which is spaced apart from the open position F by a predetermined distance).

The above problem is solved in the control system of the present invention by employing the potentiometer 8 as follows:

For solving the above problem, the control system $S_3$ of the present invention shown in Fig. 18 is used, in which system $S_3$:

first, two kind of voltage values (i.e., preset values) "$V_{ref+}$" and "$V_{ref-}$" (provided that the value $V_{ref+}$ is larger that the value $V_{ref-}$) are determined in the processing means 6. These preset values are supplied by some external means according to installation conditions of the door or object 1, and stored in the memory 7. Then, the processing means 6 supplies data corresponding to these preset values "$V_{ref+}$" and "$V_{ref-}$" to a digital-to-analog converter 20 which is hereinafter referred to the (D/A) converter 20 which converts the data into the voltage values "$V_{ref+}$" and "$V_{ref-}$" being fed-back) to the processing means 6.

Then, the processing means 6 calculates the position $N_p$ of the door or object 1 on the basis of both the position voltage values $V_{IN}$ and the preset values "$V_{ref+}$" and "$V_{ref-}$" through the following equation (6):

$$N_p = (V_{IN} - V_{ref-}) \times N / (V_{ref+} - V_{ref-}) \quad (6)$$

where: $V_{ref+} > V_{IN} > V_{ref-}$; and, N is a value representing the operation range or stroke of the object 1 (the larger the value N - the more the precision detection of the position $N_P$ of the object 1 is realized).

The value N is determined according to characteristics of the (D/A) converter 20 for storing data such as the position of the object 1. For example, in case of an 8-bit memory, the value N is equal to 255.

Consequently, it is possible for the processing means 6 to read an arbitrary position $N_P$ of the object 1 within a range of from a value "O (zero)" to the value N.

In this case, a range of the resistance value corresponding to the effective angle of rotation of the potentiometer 8 ranging, for example, from 0° to 320° is defined to correspond to a range of from $R_{ss}$ to $R_{cc}$. More particularly: a voltage value $V_{ss}$, which is normally 0 (zero) volt, corresponds to the resistance value $R_{ss}$; a voltage value $V_{cc}$, which is normally 5 volts, corresponds to the resistance value $R_{cc}$; and a voltage value $V_{Ro}$ corresponds to the resistance value $R_o$ at the closed position 0 shown in Fig. 17; and, a voltage value $V_{R1}$ corresponds to the resistance value $R_1$ at the full-open position F shown in Fig. 17. Under such circumstances, both "$N_1$" and "$N_2$" to be supplied to the (D/A) converter 20 are set so as to have the voltage values "$V_{ref+}$" and "$V_{ref-}$" satisfy the following equations (7) and (8):

$$V_{ref+} = V_{R1} = (V_{cc} - V_{ss}) \times N_1 / N \quad (7)$$

$$V_{ref-} = V_{Ro} = (V_{cc} - V_{ss}) \times N_o / N \quad (8)$$

where: $N_1$ and $N_o$ are values of the positions "$N_P$" corresponding to $V_{R1}$ and $V_{Ro}$ respectively, and obtained by dividing the entire operation range or stroke $R_s$ by the above equation (6) into $N_P$ pieces or positions (where the suffix "P" of the "$N_P$" is integer, so that the $N_P$ pieces or positions correspond to $N_1$, $N_2$, $N_3$, ..., $N_n$).

Based on the equation (6), it is possible to read an arbitrary position $N_P$ of the object 1 within the entire operation range $R_s$ with the use of a unit resistance which is obtained by dividing a range of the resistance values (which ranges from "$R_o$" to "$R_1$", and corresponds to the entire operation range $R_s$) by "N" as follows:

$$N_P = (V_{IN} - V_{Ro}) \times N / (V_{R1} - V_{Ro}) = (R_{IN} - R_o) \times N / R_s \quad (9)$$

where: $R_{IN}$ is a resistance value of the potentiometer 8 corresponding to "$V_{IN}$".

Further, as for a range for determining the braking conditions of the object 1 or door (ranging from the braking start point B' shown in Fig. 17 to the open position F of the door), both the "$N_1$" and "$N_B$" supplied to the (D/A) converter 20 are so set as to satisfy the following equations (10) and (11):

$$V_{ref+} = V_{R1} = (V_{cc} - V_{ss}) \times N_1 / N \quad (10)$$

$$V_{ref-} = V_{RB} = (V_{cc} - V_{ss}) \times N_B / N \quad (11)$$

where: $N_B$ is obtained by dividing the entire operation range or stroke $R_s$ by the above equation (6) into $N_P$ pieces or positions (where the suffix "P" of the "$N_P$" is integer, so that the $N_P$ pieces or positions correspond to $N_1$, $N_2$, $N_3$, ..., $N_n$), and is a value of the "$N_P$" corresponding to the "$V_{RB}$".

Based on the equation (6), it is possible to read an arbitrary position $N_P$ of the object 1 with the use of a unit voltage which is obtained by dividing a range of the resistance values (which ranges from "$R_B$" to "$R_1$", and corresponds to the above operation range) by "N" as follows:

$$N_P = (V_{IN} - V_{RB}) \times N / (V_{R1} - V_{RB}) = (R_{IN} - R_B) \times N / (R_1 - R_B) \quad (12)$$

Consequently, when the position $N_P$ of the object 1 is within the range of from "$R_B$" to "$R_1$", it is position to determine a value of such position more precisely than to determine it by the use of the equations (7) and (8).

In this case, the braking conditions of the object 1 of door are determined by: the opening speed within a range of from the braking start point B' of Fig. 17 to the open position F; and, the braking distance of the door. Since the position $N_P$ of the door within this range is represented by the above equation (12), it is possible to control the operation of the automatic door according to a predetermined pattern after completion of its direction-reversing operation depending on the above braking conditions. Namely, as shown in Fig. 17, in a range of from the position B to the position F, it is possible to control the operation of the door according to such predetermined pattern by supplying in value a braking operation start point Y' corresponding to the value "$N_P$" of the direction-reversing position X which is determined by a direction-reversing instruction. In this case, the braking operation start point Y' may be an intersection point at which an inclined straight line (which extends in the opening direction from the direction-reversing point X with a certain inclination or acceleration) intersects with a straight line connecting the point B' with the point F. Consequently, it is possible to determine the braking operation start point Y' corresponding to the direction-reversing position X.

In practice, when the direction-reversing operation of the door is conducted, the door is accelerated after completion of the direction-reversing operation according to the above predetermined pattern. Then, at the braking operation start point Y' corresponding to the value $N_P$ representing the direction-reversing position X, the door starts its braking operation according to the above braking conditions, so that the direction-reversing operation of the automatic door is precisely controlled.

As described above, by properly setting the values "$V_{ref+}$" and "$V_{ref-}$" through the (D/A) converter 20, it is possible to improve in resolution of detection the position of the object 1 or door.

Further, in case that the door performs its partial-opening operation in which the door is driven up to at a midpoint of its possible entire operation range or stroke $R_s$ in the opening operation thereof, an opening range or stroke of the door may be represented by "x %" of the entire operation range $R_S$ as follows:

$$V_{ref+} = (V_{IN} - V_{RB}) \times (X / 100) + V_{Ro} = (V_{cc} - V_{ss}) \times N_x / N \quad (13)$$

$$N_x = (N_1 - N_o) \times (X / 100) + N_o \quad (14)$$

$$V_{ref-} = V_{Ro} = (V_{cc} - V_{ss}) \times N_o / N \quad (15)$$

Consequently, it is possible to readily realize an arbitrary or desired partial-opening operation with an arbitrary operation range or stroke by inputting to the (D/A) converter 20 such values "$N_x$" and "$N_o$" satisfying the above equations (13), (14) and (15).

Therefore, in this case, it is possible to eliminate the stroke learning operation required for setting the range or stroke in the partial-opening operation of the object 1 of door.

## Claims

**1.** In a control system for driving an object (1) in a proper manner, comprising: a drive portion (2, 3) for driving said object (1) being driven; a processing means (6) which produces a signal for controlling an output of said drive portion (2, 3); a memory (7) for storing information which is required of said processing means (6) to produce said signal; and, a variable resistor having its resistance value vary according to said output of said drive portion (2, 3), said variable resistor (8) being mechanically connected with an output shaft of said drive portion (2, 3);

the improvement wherein: said processing means (6) reads said resistance value of said variable resistor (8) to determine an absolute position of said object (1) on the basis of said resistance value, said absolute position being stored in said memory (7) as one of said information.

**2.** The control system as set forth in claim 1, wherein

said processing means (6): calculates data as to an operation speed and an operation direction of said object (1) on the basis of a variation in resistance value of said variable resistor (8); determines the relationship between said data and a position of said object (1); and, produces a signal for controlling an output of said drive portion (2, 3) on the basis of said relationship.

**3.** The control system as set forth in claim 2, wherein

said processing means (6): calculates an operation acceleration of said object (1) on the basis of a variation in operation-speed/unit-time of said object (1); performs a monitoring operation as to said operation acceleration; and, performs a predetermined safety control of said drive portion (2, 3) in case that some operation trouble of said object (1) is detected through said monitoring operation.

**4.** The control system as set forth in claim 1, wherein

said processing means (6): monitors each of a signal value for controlling an output of said drive portion (2, 3) and a resistance value issued from said variable resistor (8); and, permits said drive portion (2, 3) to perform a predetermined braking operation in case that a difference between said signal value and said resistance value is out of a predetermined range.

**5.** The control system as set forth in claim 1, wherein

said processing means (6): sets an operation range or stroke of said object (1) on the basis of said resistance value of said variable resistor (8); and, replaces said operation range with another operation range or stroke different from said operation range in case that said object (1) is repeatedly operated within said another operation range or stroke by predetermined times.

**6.** The control system as set forth in claim 5, wherein:

said object (1) is operated within said operation range once every predetermined frequency of operations of said object (1) within said another operation range, or every certain period of time, or at every turning-on operation of a power switch of said control system; and, when it is found that said operation range is still applicable to said object (1), said processing means (6) permits said another operation range to be replaced again with said operation range.

**7.** The control system as set forth in claim 1, wherein:

said processing means (6) sets two kinds of operation ranges, i.e., a full-opening operation range or stroke and a partial-opening operation range or stroke (which is narrower in range or stroke than said full-opening operation range) on the basis of said resistance value of said variable resistor (8) to have said memory (7) store said two kinds of operation ranges therein;

and, detects a variation of detection areas for determining an operation of said object (1) by means of a detection portion (19, 19') to judge whether said full-opening operation range or said partial-opening operation range is applied to said the operation of object (1) on the basis of the thus detected variation, whereby said drive portion (2, 3) controls the operation of said object (1) within the thus judged or selected operation range or stroke of said object (1).

**8.** The control system as set forth in claim 1, wherein

said processing means (6): sets two kinds of operation ranges, i.e., a full-opening operation range or stroke and a partial-opening operation range or stroke (which is narrower in range or stroke than said full-opening operation range) on the basis of said resistance value of said variable resistor (8) to have said memory (7) store said two kinds of operation ranges therein;

receives a detection signal issued from a detection portion (19, 19') for detecting a variation of detection areas in order to determine an operation of said object (1), the detection signal being received as a start signal for starting the operation of said object (1);

judges whether said full-opening operation range or said partial-opening operation range is applied to the operation of said object (1) on the basis of a predetermined threshold value as to the number of said start signals per unit time; and

controls said drive portion (2, 3) according to the thus judged or selected operation range of said object (1).

**9.** In a control system for driving an object (1) in a proper manner, comprising: a drive portion (2, 3) for driving said object (1) being driven; a processing means (6) which produces a signal for controlling an output of said drive portion (2, 3); a memory (7) for storing information which is required of said processing means (6) to produce said signal; a variable resistor having its resistance value vary according to said output of said drive portion (2, 3), said variable resistor (8) being mechanically connected with an output shaft of said drive portion (2, 3); and, a signal or pulse generator (11) for issuing a signal or pulse corresponding an output of said drive portion (2, 3), said pulse generator (11) being connected with said output shaft of said drive portion (2, 3);

the improvement wherein said processing means (6):

reads said resistance value of said variable resistor (8) to determine an absolute position of said object (1) on the basis of said resistance value, said absolute position being stored in said memory (7) as one of said information; and

calculates a value corresponding to said absolute position on the basis of said signal or pulse, the thus calculated value being stored in said memory (7) as one of said information.

**10.** The control system as set forth in claim 9, wherein:

said processing means (6) detects a position of said object (1) on the basis of said signal or pulse when said processing means (6) fails to detect said position of said object (1) on the basis of said resistance value of said variable resistor (8).

**11.** The control system as set forth in claim 9, wherein,

based on a variation in each of: said signal or pulse issued from said signal or pulse generator (11); and said resistance value of said variable resistor (8), the processing means (6) calculates data as to an operation speed and an operation direction of said object (1) to determine the relationship between said data and the position of said object (1) in order to control the operation of said object (1) on the basis of said relationship, whereby a control signal issued from said processing means (6) for controlling said drive portion (2, 3) is determined on the basis of said relationship.

**12.** The control system as set forth in claim 9, wherein:

in case that said processing means (6) fails to detect both said operation speed and said operation direction of said object (1) based on a variation of said signal or pulse, said processing means (6) calculates both said operation speed and said operation direction of said object (1) on the basis of a variation of said resistance value of said variable resistor (8).

**13.** The control system as set forth in claim 9, wherein

said processing means (6):

monitors each of: a value of a control signal for controlling said output of said drive portion (2, 3); and said resistance value of said variable resistor (8), said resistance value having been stored in said memory (7);

and, permits said drive portion (2, 3) to perform a braking operation of said object (1) when a difference between said value of said control signal and said resistance value of said variable resistor (8) is out of a predetermined range.

**14.** The control system as set forth in claim 9, wherein

said processing means (6):

determines an operation range or stroke of said object (1) based on said resistance value of said variable resistor (8);

and, replaces automatically said operation range with another operation range or stroke (which is different in range or stroke from said operation range) when said object (1) is repeatedly operated within said another operation range by predetermined times.

**15.** The control system as set forth in claim 14, wherein:

said object (1) is operated within said operation range once every predetermined frequency of operations of said object (1) within said another operation range, or every certain period of time, or at every turning-on operation of a power switch of said control system; and, when it is found that said operation range is still applicable to said object (1), said processing means (6) permits said another operation range to be replaced again with said operation range.

**16.** The control system as set forth in claim 9, wherein:

said processing means (6) sets two kinds of operation ranges, i.e., a full-opening operation range or stroke and a partial-opening operation range or stroke (which is narrower in range or stroke than said full-opening operation range) on the basis of said resistance value of said variable resistor (8) to have said memory (7) store said two kinds of operation ranges therein;

and, detects a variation of detection areas for determining an operation of said object (1) by means of a detection portion (19, 19') to judge whether said full-opening operation range or said partial-opening operation range is applied to said the operation of object (1) on the basis of the thus detected variation, whereby said drive portion (2, 3) controls the operation of said object (1) within the thus judged or selected operation range or stroke of said object (1).

**17.** The control system as set forth in claim 9, wherein

said processing means (6): sets two kinds of operation ranges, i.e., a full-opening operation range or stroke and a partial-opening operation range or stroke (which is narrower in range or stroke than said full-opening operation range) on the basis of said resistance value of said variable resistor (8) to have said memory (7) store said two kinds of operation ranges therein;

receives a detection signal issued from a detection portion (19, 19') for detecting a variation of detection areas in order to determine an operation of said object (1), the detection signal being received as a start signal for starting the operation of said object (1);

judges whether said full-opening operation range or said partial-opening operation range is applied to the operation of said object (1) on the basis of a predetermined threshold value as to the number of said start signals per unit time; and

controls said drive portion (2, 3) according to the thus judged or selected operation range of said object (1).

FIG. 1

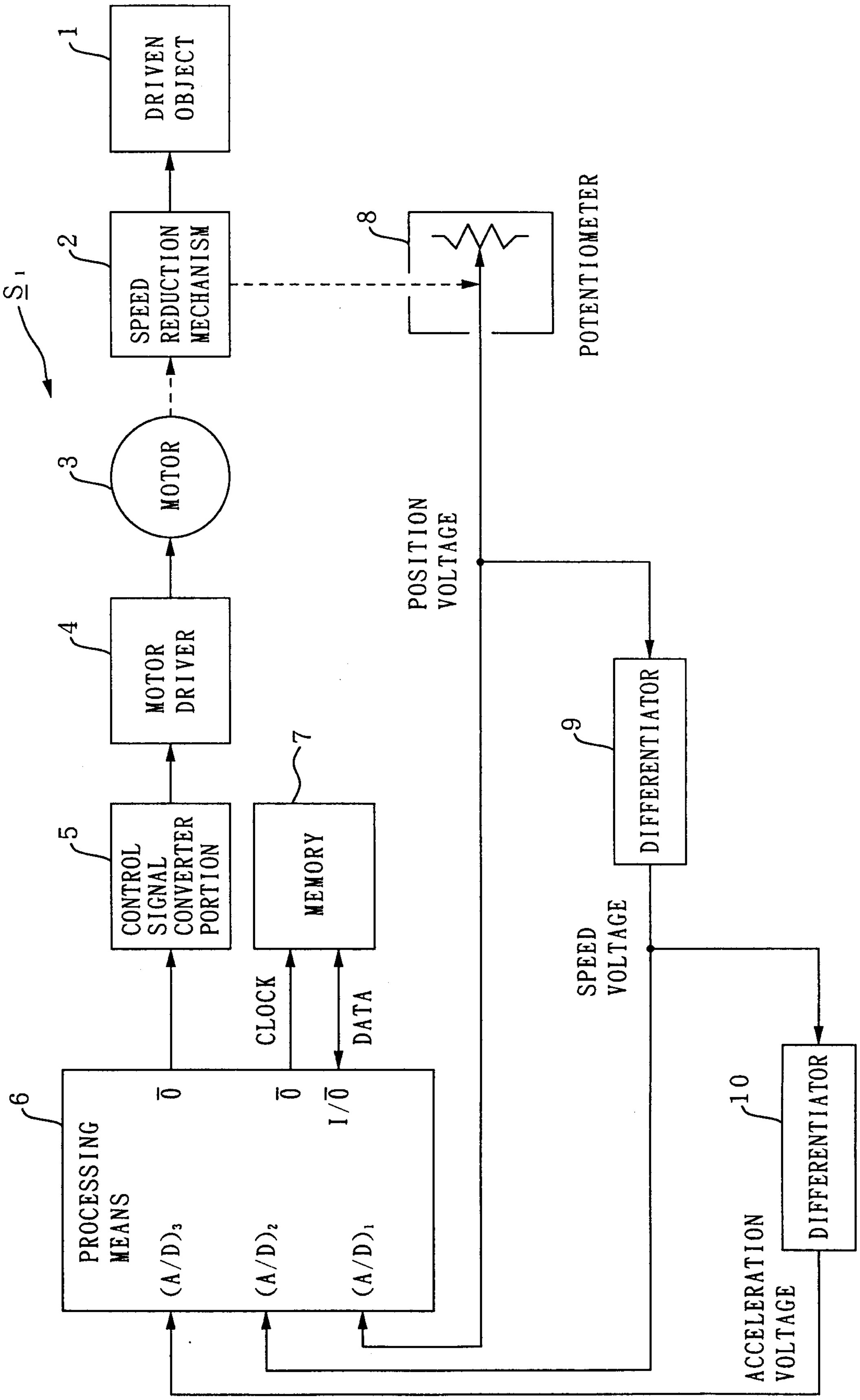
S1
1
DRIVEN OBJECT
2
SPEED REDUCTION MECHANISM
3
MOTOR
4
MOTOR DRIVER
5
CONTROL SIGNAL CONVERTER PORTION
6
PROCESSING MEANS
O
O
I/O
(A/D)3
(A/D)2
(A/D)1
7
MEMORY
CLOCK
DATA
8
POTENTIOMETER
POSITION VOLTAGE
9
DIFFERENTIATOR
SPEED VOLTAGE
10
DIFFERENTIATOR
ACCELERATION VOLTAGE

FIG.2

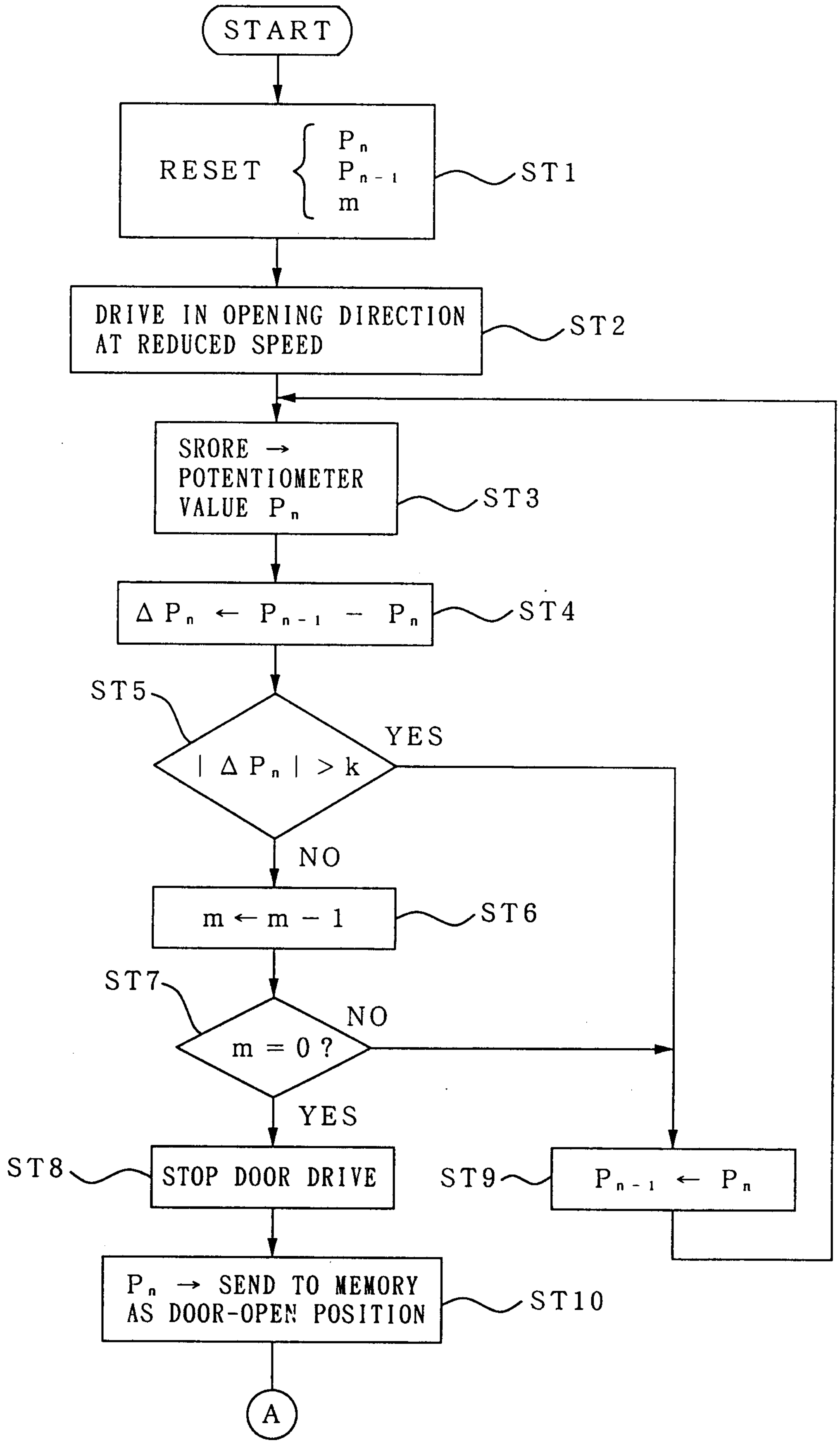
START
RESET { $P_n$ $P_{n-1}$ m
ST1
DRIVE IN OPENING DIRECTION AT REDUCED SPEED
ST2
SRORE → POTENTIOMETER VALUE $P_n$
ST3
$\Delta P_n \leftarrow P_{n-1} - P_n$
ST4
ST5
$|\Delta P_n| > k$
YES
NO
$m \leftarrow m - 1$
ST6
ST7
$m = 0$ ?
NO
YES
ST8
STOP DOOR DRIVE
ST9
$P_{n-1} \leftarrow P_n$
$P_n$ → SEND TO MEMORY AS DOOR-OPEN POSITION
ST10
A

FIG. 3

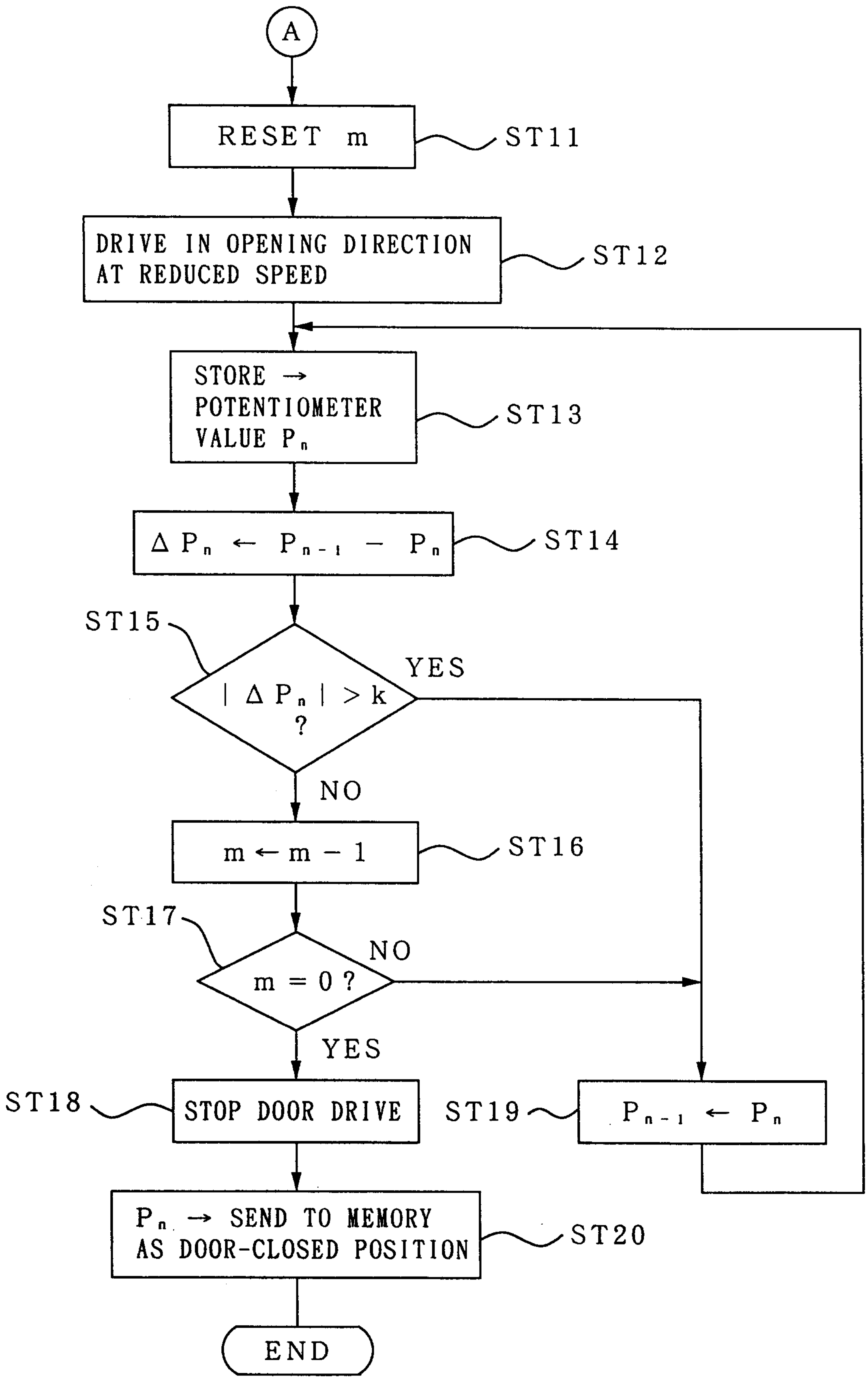
A
RESET m
ST11
DRIVE IN OPENING DIRECTION AT REDUCED SPEED
ST12
STORE → POTENTIOMETER VALUE $P_n$
ST13
$\Delta P_n \leftarrow P_{n-1} - P_n$
ST14
ST15
$|\Delta P_n| > k$ ?
YES
NO
$m \leftarrow m - 1$
ST16
ST17
$m = 0$ ?
NO
YES
ST18
STOP DOOR DRIVE
ST19
$P_{n-1} \leftarrow P_n$
$P_n$ → SEND TO MEMORY AS DOOR-CLOSED POSITION
ST20
END

FIG.4

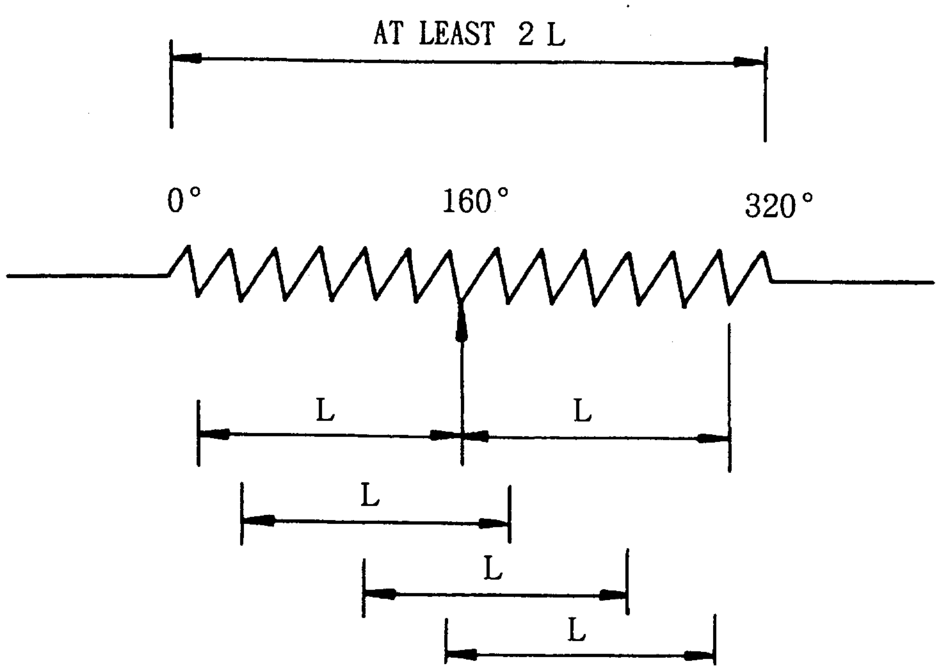

FIG. 5

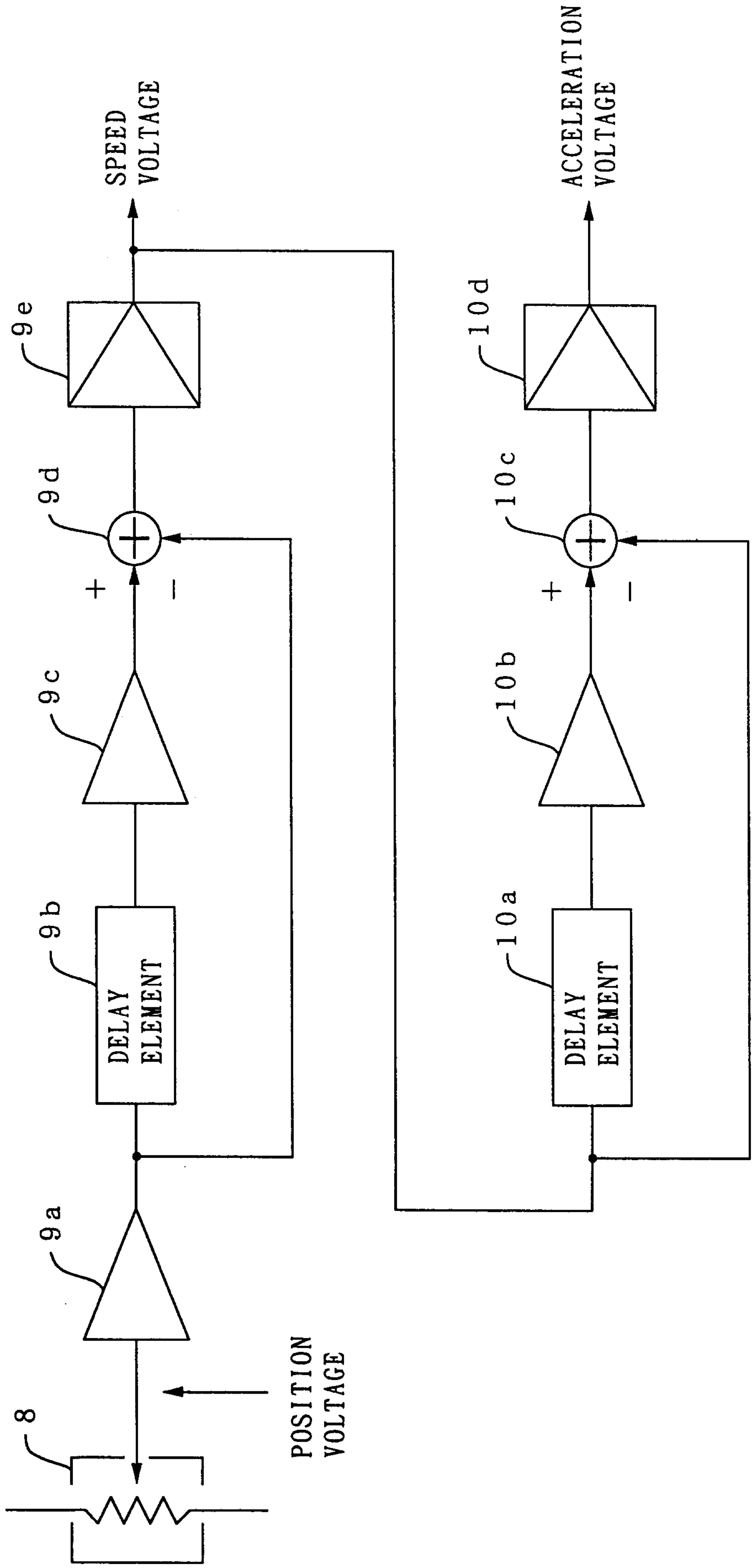
8
POSITION VOLTAGE
9a
9b
DELAY ELEMENT
9c
+
−
9d
9e
SPEED VOLTAGE
10a
DELAY ELEMENT
10b
+
−
10c
10d
ACCELERATION VOLTAGE

FIG.6

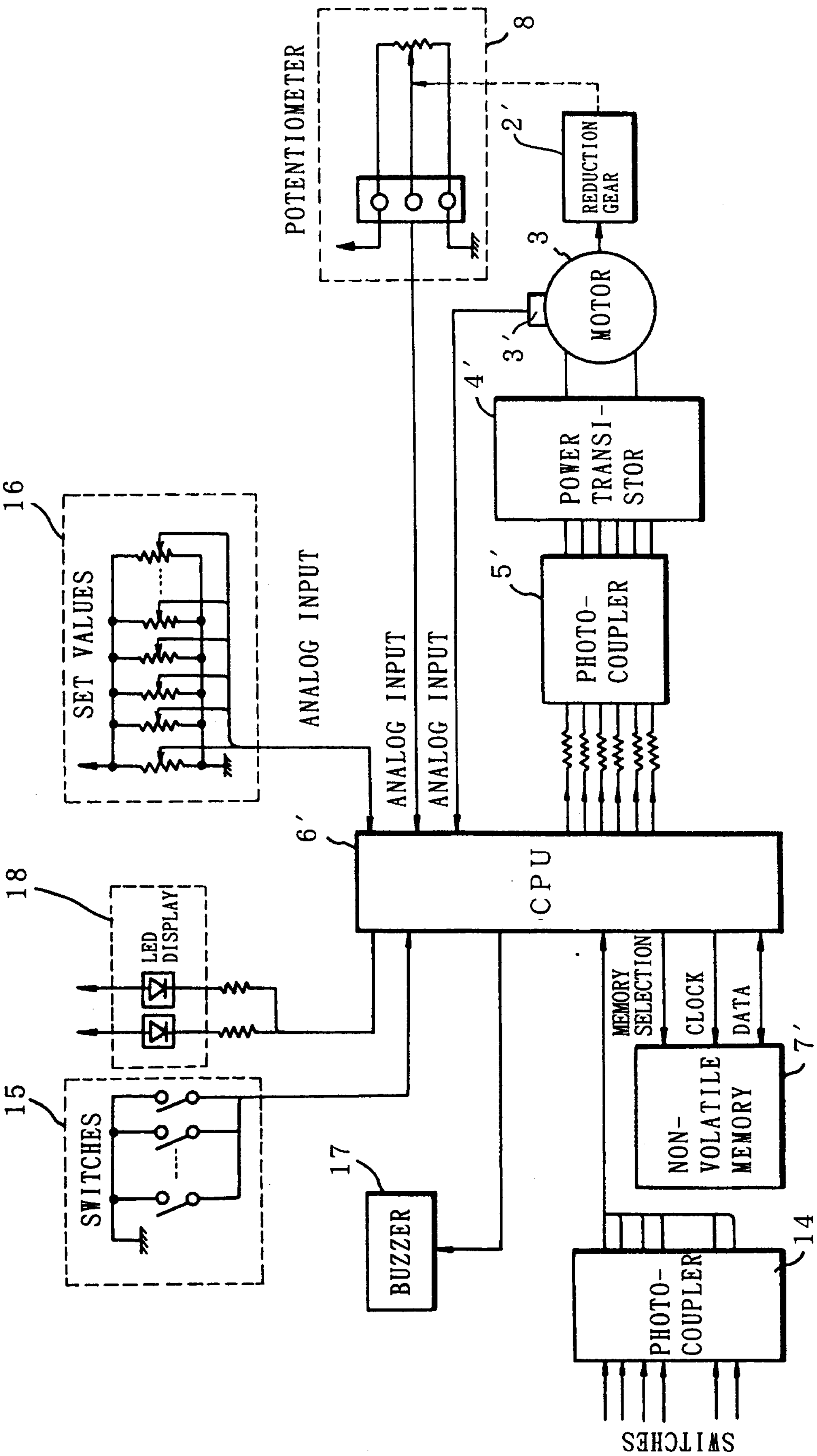
POTENTIOMETER
8
2'
REDUCTION GEAR
3
MOTOR
3'
4'
POWER TRANSISTOR
5'
PHOTO-COUPLER
16
SET VALUES
ANALOG INPUT
ANALOG INPUT
ANALOG INPUT
6'
CPU
18
LED DISPLAY
15
SWITCHES
17
BUZZER
MEMORY SELECTION
CLOCK
DATA
7'
NON-VOLATILE MEMORY
14
PHOTO-COUPLER
SWITCHES

FIG. 7

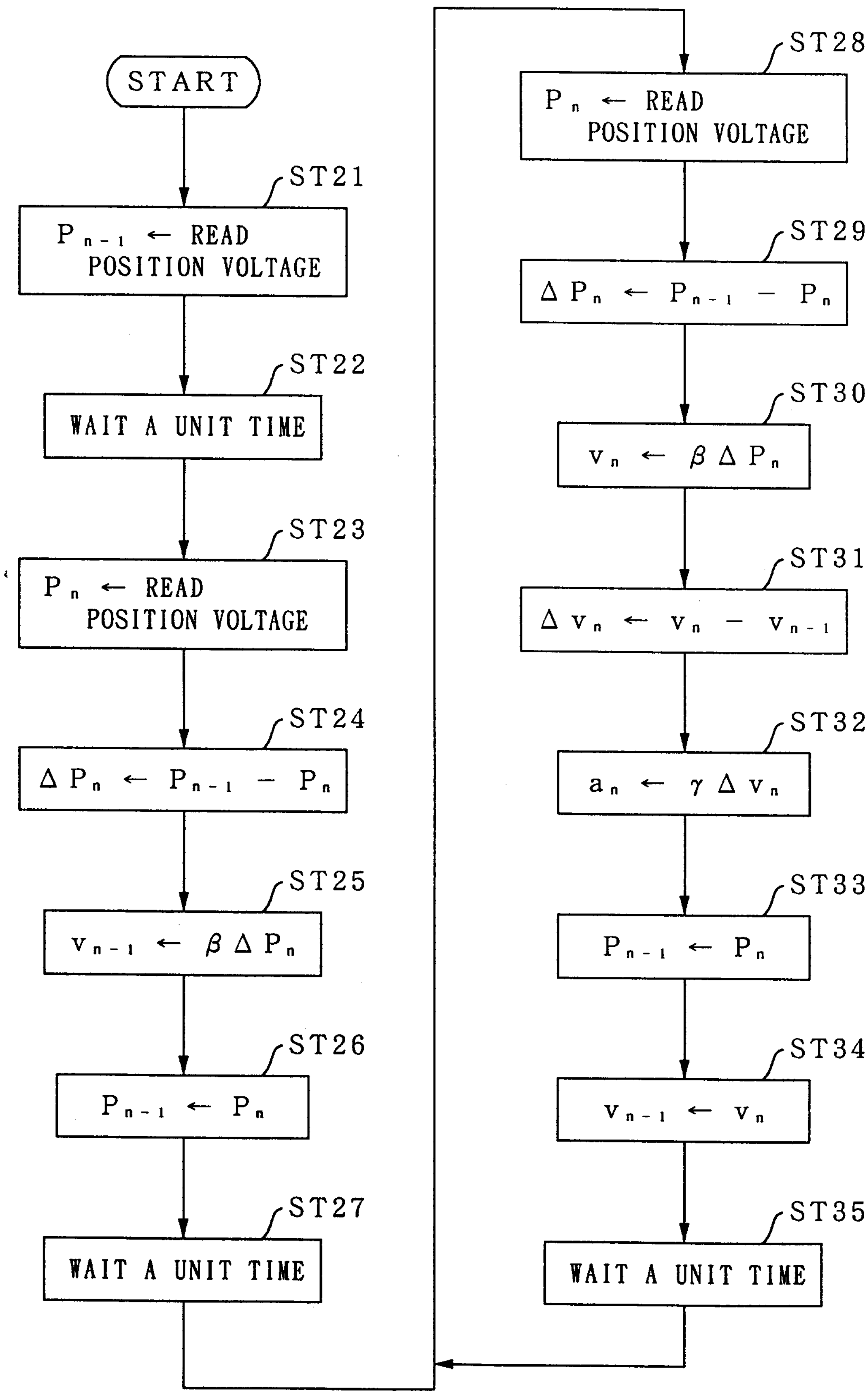
START
ST21
$P_{n-1}$ ← READ POSITION VOLTAGE
ST22
WAIT A UNIT TIME
ST23
$P_n$ ← READ POSITION VOLTAGE
ST24
$\Delta P_n \leftarrow P_{n-1} - P_n$
ST25
$v_{n-1} \leftarrow \beta \Delta P_n$
ST26
$P_{n-1} \leftarrow P_n$
ST27
WAIT A UNIT TIME
ST28
$P_n$ ← READ POSITION VOLTAGE
ST29
$\Delta P_n \leftarrow P_{n-1} - P_n$
ST30
$v_n \leftarrow \beta \Delta P_n$
ST31
$\Delta v_n \leftarrow v_n - v_{n-1}$
ST32
$a_n \leftarrow \gamma \Delta v_n$
ST33
$P_{n-1} \leftarrow P_n$
ST34
$v_{n-1} \leftarrow v_n$
ST35
WAIT A UNIT TIME

FIG. 8

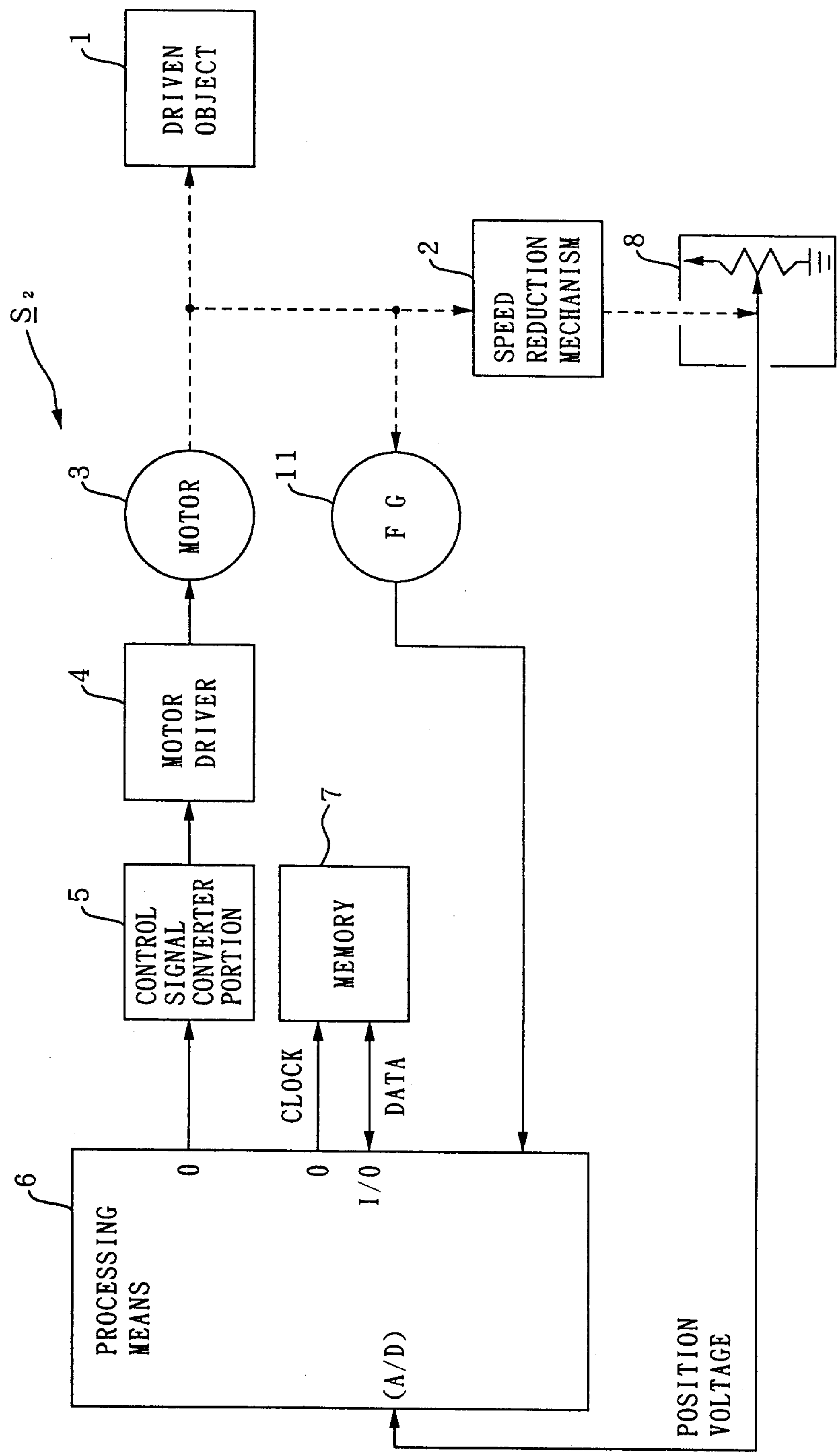
S2
1
DRIVEN OBJECT
2
SPEED REDUCTION MECHANISM
8
3
MOTOR
11
F G
4
MOTOR DRIVER
5
CONTROL SIGNAL CONVERTER PORTION
7
MEMORY
CLOCK
DATA
6
PROCESSING MEANS
O
O
I/O
(A/D)
POSITION VOLTAGE

F I G . 9

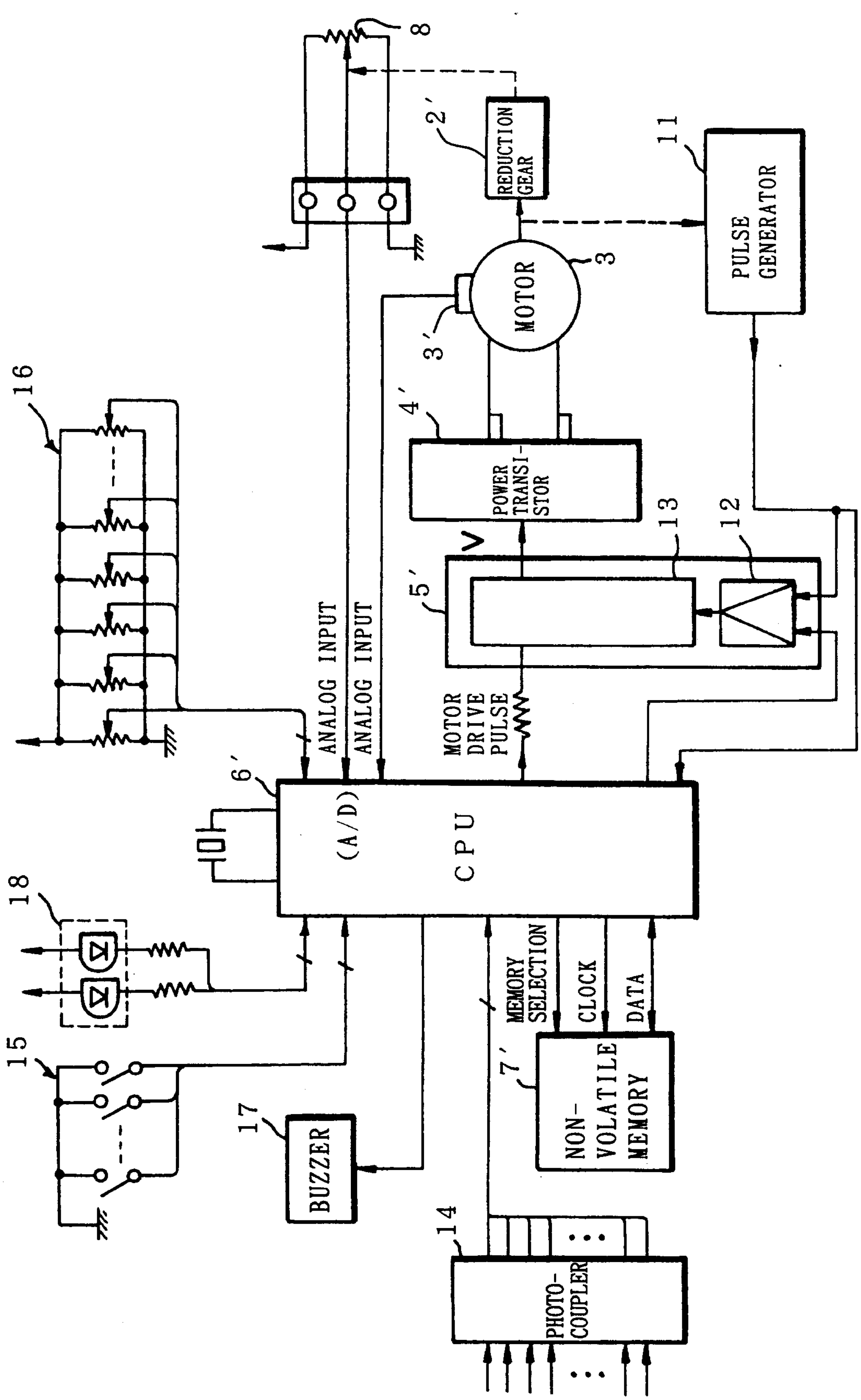
8
2′
REDUCTION GEAR
11
PULSE GENERATOR
3
MOTOR
3′
4′
POWER TRANSI-STOR
13
12
5′
16
ANALOG INPUT
ANALOG INPUT
MOTOR DRIVE PULSE
6′
(A/D)
C P U
18
15
MEMORY SELECTION
CLOCK
DATA
7′
NON-VOLATILE MEMORY
17
BUZZER
14
PHOTO-COUPLER

FIG.10(a)

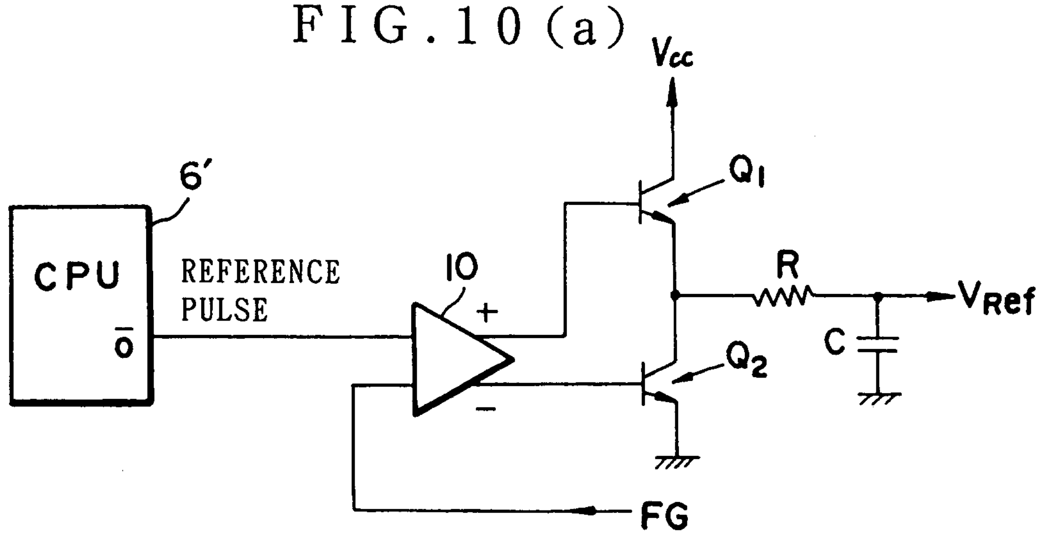


FIG.10(b)

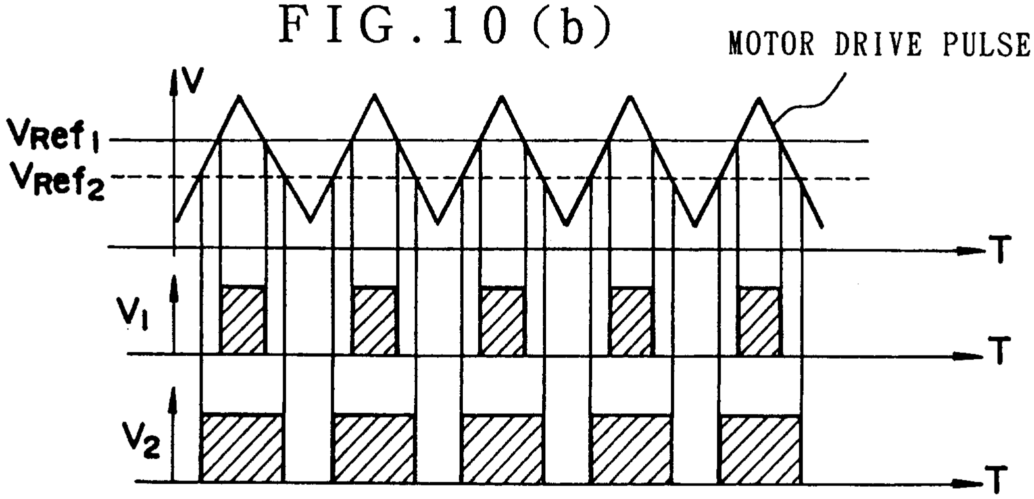


FIG.10(c)

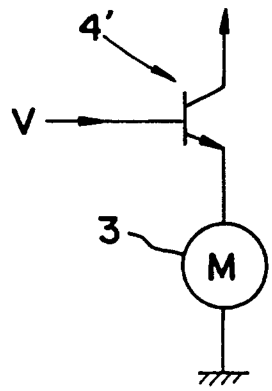

FIG. 11

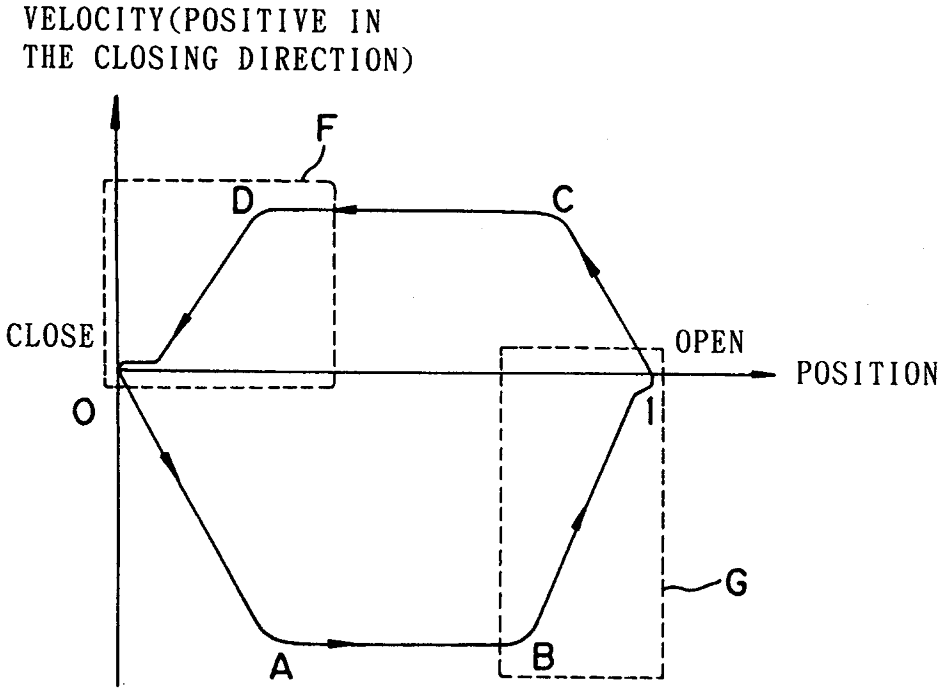
VELOCITY(POSITIVE IN THE CLOSING DIRECTION)
F
D
C
CLOSE
OPEN
POSITION
O
1
G
A
B

FIG.12

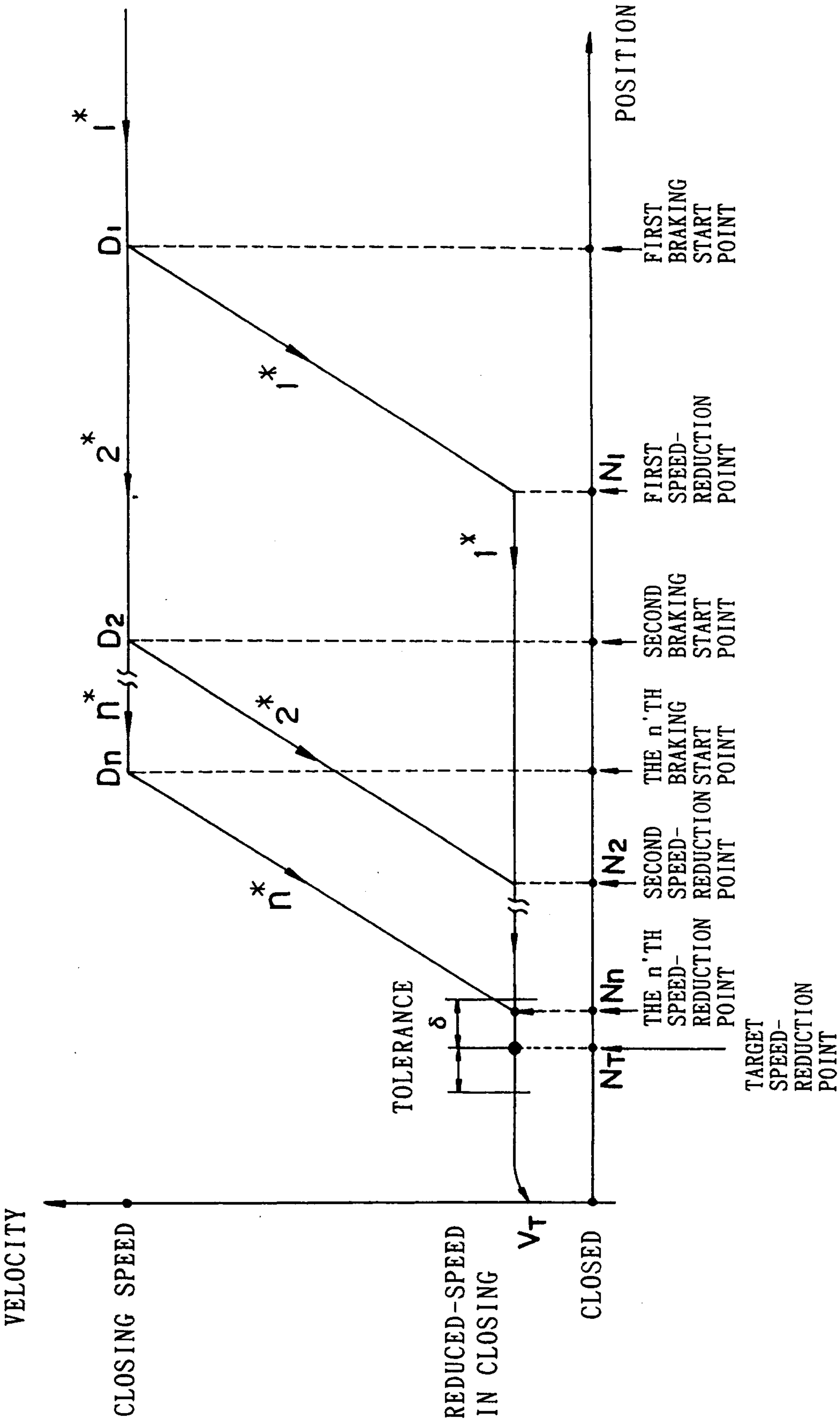
VELOCITY
CLOSING SPEED
REDUCED-SPEED IN CLOSING
$V_T$
CLOSED
POSITION
TOLERANCE
δ
$D_1$
$D_2$
$D_n$
1*
2*
n*
$N_1$
$N_2$
$N_n$
$N_T$
FIRST BRAKING START POINT
FIRST SPEED-REDUCTION POINT
SECOND BRAKING START POINT
THE n'TH BRAKING START POINT
SECOND SPEED-REDUCTION POINT
THE n'TH SPEED-REDUCTION POINT
TARGET SPEED-REDUCTION POINT

FIG.13

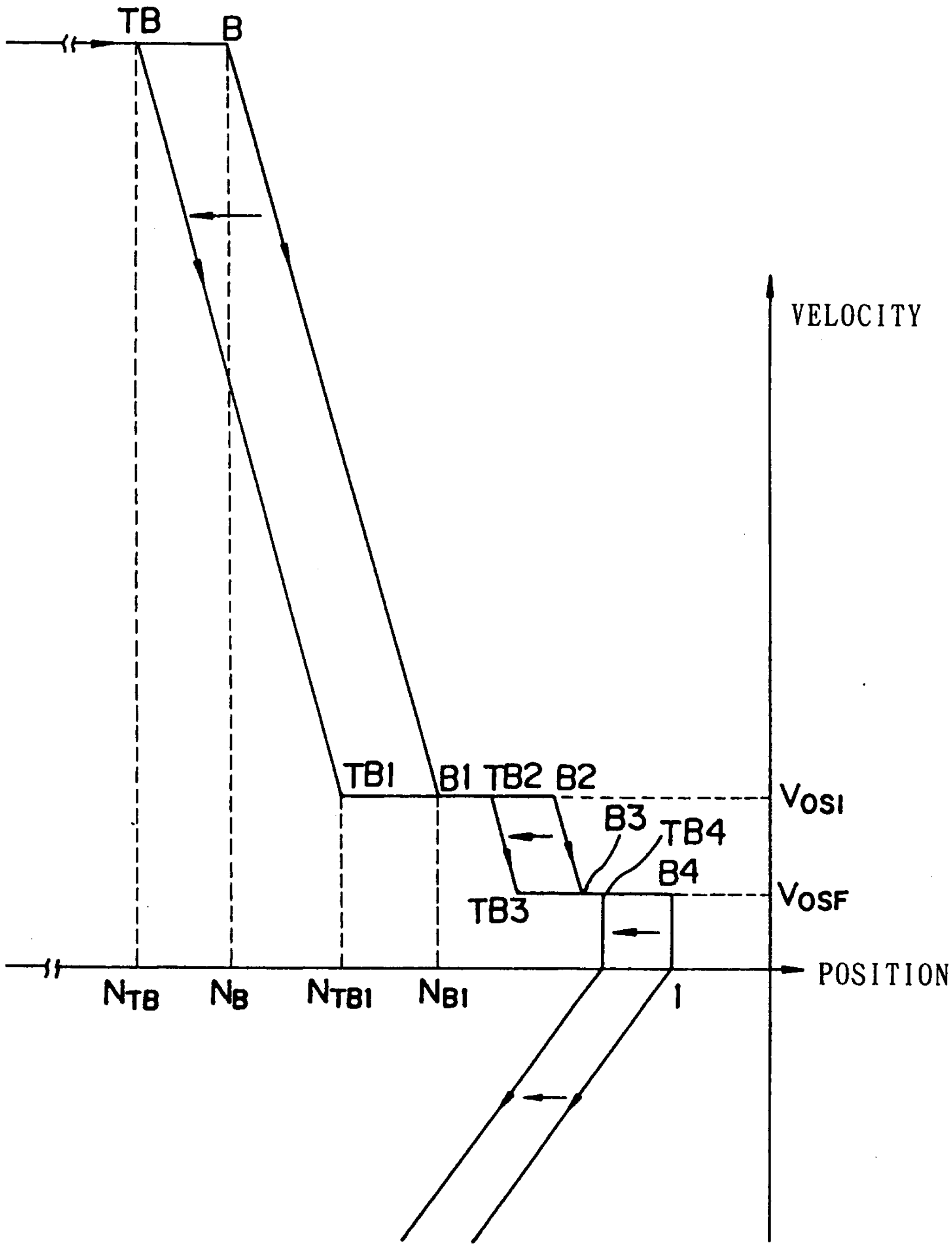
TB
B
VELOCITY
TB1
B1
TB2
B2
Vosi
B3
TB4
B4
TB3
Vosf
POSITION
NTB
NB
NTB1
NB1
1

FIG.14

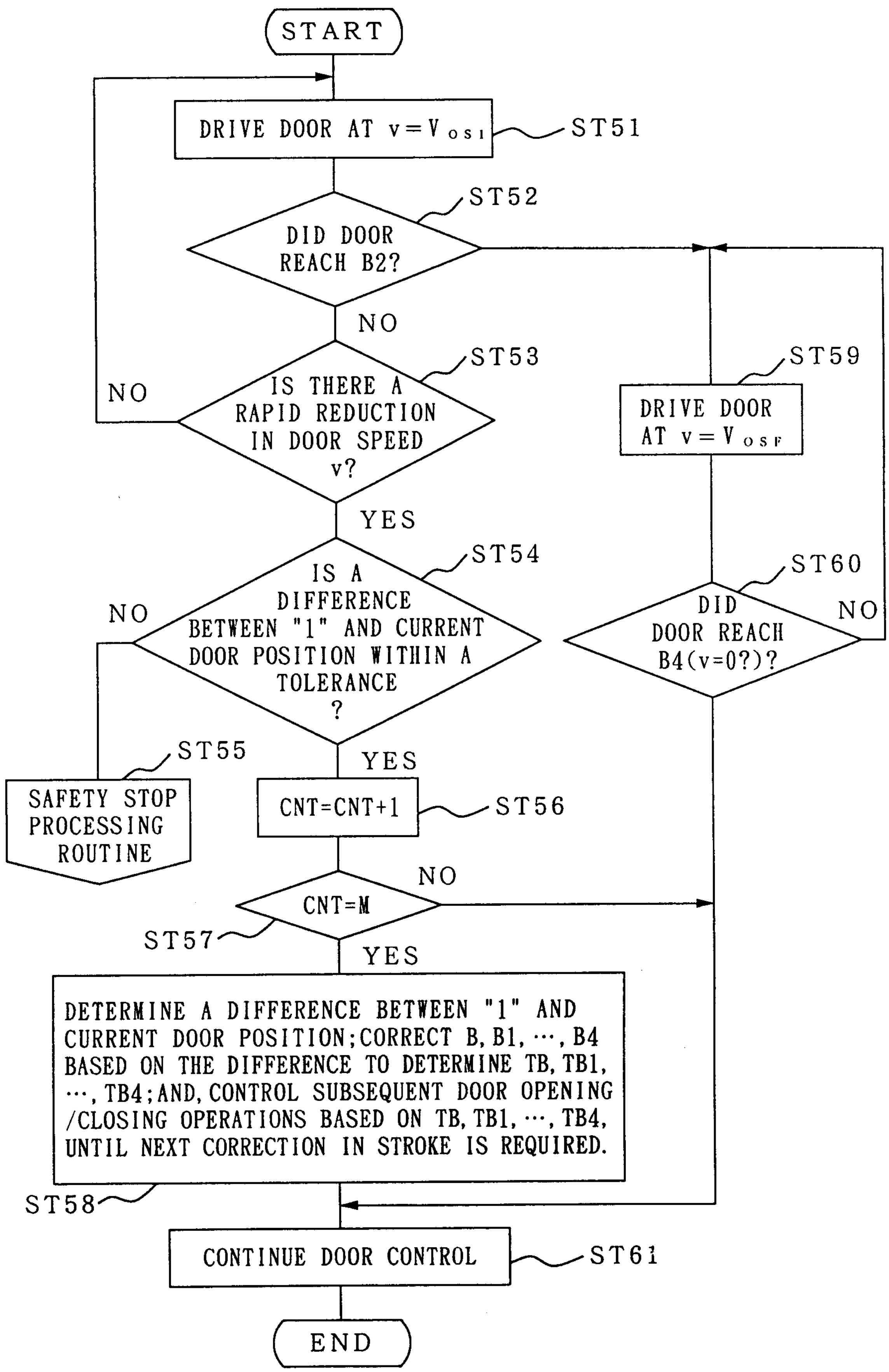
START
DRIVE DOOR AT v=V OS1
ST51
DID DOOR REACH B2?
ST52
NO
IS THERE A RAPID REDUCTION IN DOOR SPEED v?
ST53
NO
YES
IS A DIFFERENCE BETWEEN "1" AND CURRENT DOOR POSITION WITHIN A TOLERANCE ?
ST54
NO
YES
SAFETY STOP PROCESSING ROUTINE
ST55
CNT=CNT+1
ST56
CNT=M
ST57
NO
YES
DETERMINE A DIFFERENCE BETWEEN "1" AND CURRENT DOOR POSITION;CORRECT B, B1, ···, B4 BASED ON THE DIFFERENCE TO DETERMINE TB, TB1, ···, TB4;AND, CONTROL SUBSEQUENT DOOR OPENING /CLOSING OPERATIONS BASED ON TB, TB1, ···, TB4, UNTIL NEXT CORRECTION IN STROKE IS REQUIRED.
ST58
DRIVE DOOR AT v=V OSF
ST59
DID DOOR REACH B4(v=0?)?
ST60
NO
CONTINUE DOOR CONTROL
ST61
END

FIG.15

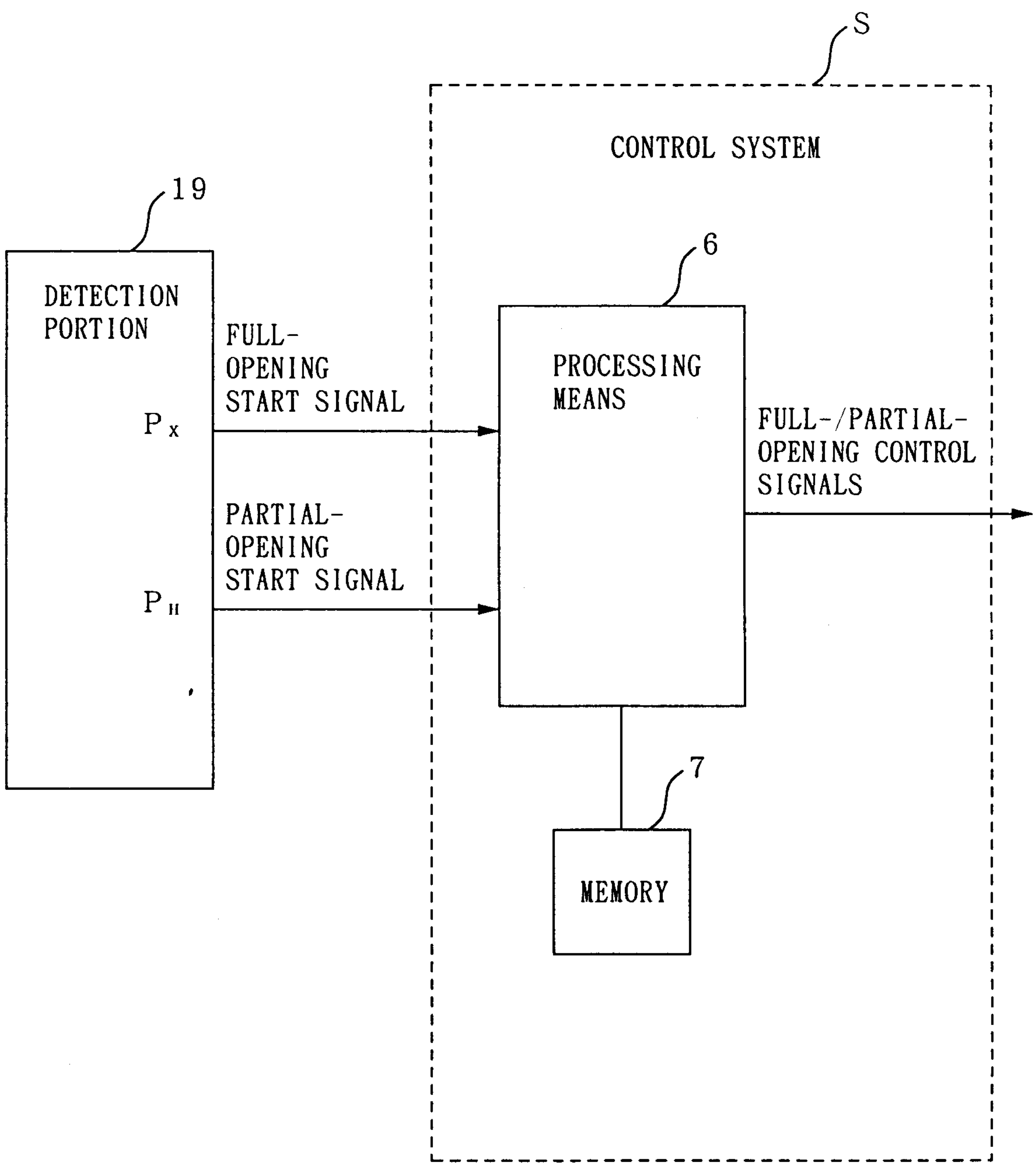
S
CONTROL SYSTEM
19
DETECTION PORTION
Px
PH
FULL-OPENING START SIGNAL
PARTIAL-OPENING START SIGNAL
6
PROCESSING MEANS
FULL-/PARTIAL-OPENING CONTROL SIGNALS
7
MEMORY

FIG.16

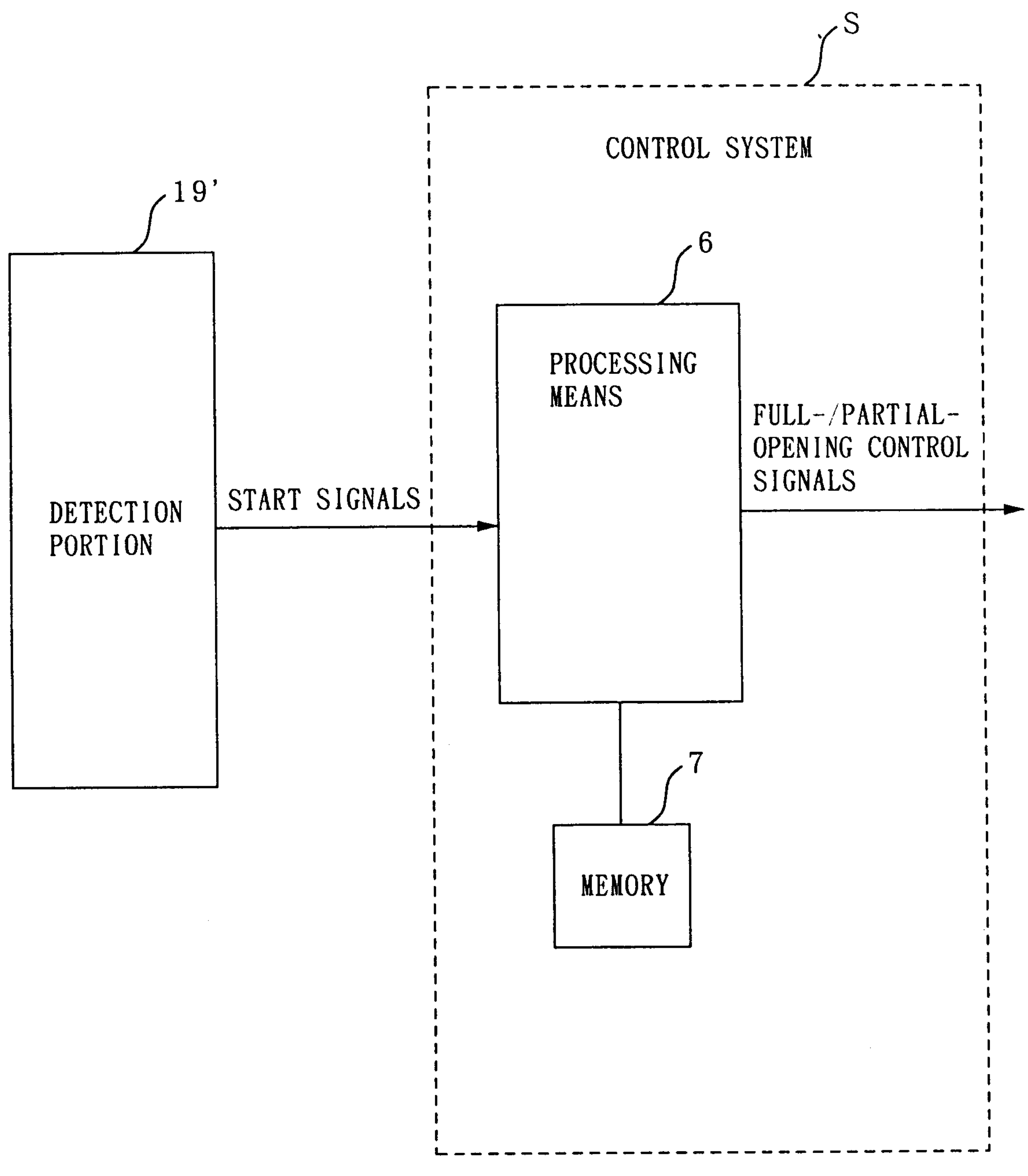
S
CONTROL SYSTEM
19'
6
PROCESSING MEANS
FULL-/PARTIAL-OPENING CONTROL SIGNALS
DETECTION PORTION
START SIGNALS
7
MEMORY

FIG.17

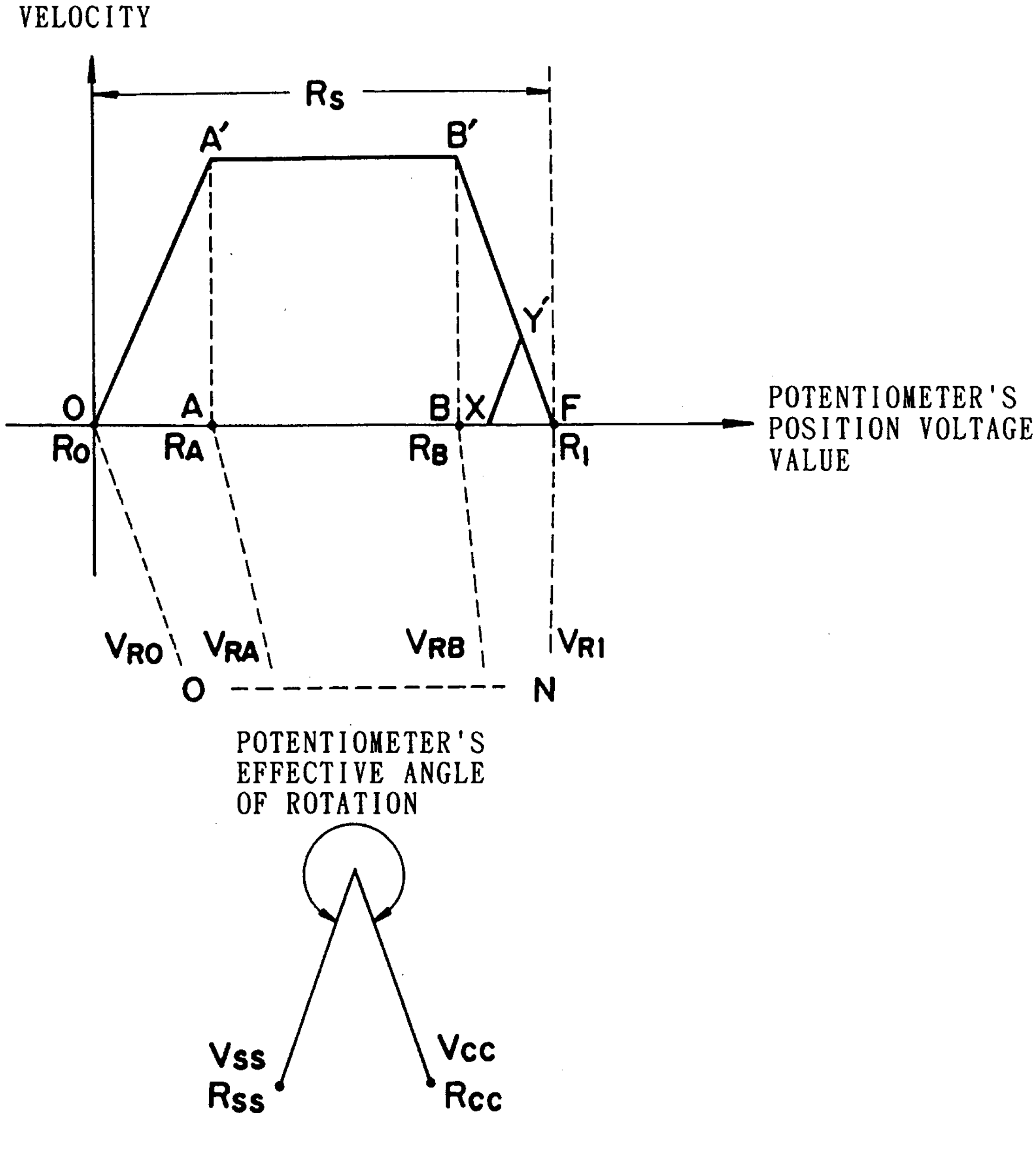
VELOCITY
Rs
A'
B'
Y'
O
A
B
X
F
Ro
RA
RB
R1
POTENTIOMETER'S POSITION VOLTAGE VALUE
VRO
VRA
VRB
VR1
O
N
POTENTIOMETER'S EFFECTIVE ANGLE OF ROTATION
Vss
Rss
Vcc
Rcc

FIG.18

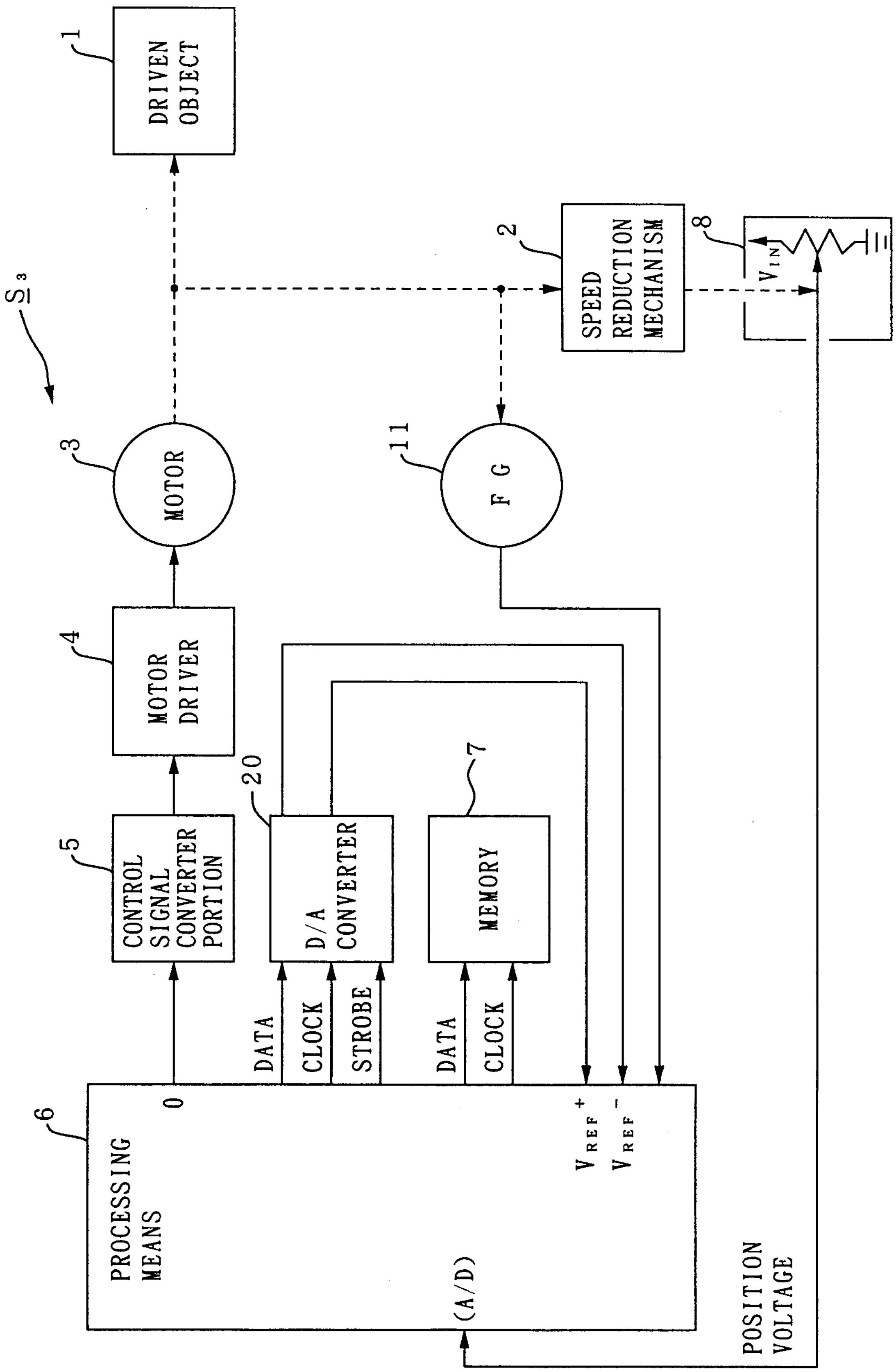
S3
1
DRIVEN OBJECT
2
SPEED REDUCTION MECHANISM
8
$V_{IN}$
3
MOTOR
11
F G
4
MOTOR DRIVER
5
CONTROL SIGNAL CONVERTER PORTION
20
D/A CONVERTER
7
MEMORY
DATA
CLOCK
STROBE
DATA
CLOCK
6
PROCESSING MEANS
0
$V_{REF}^{+}$
$V_{REF}^{-}$
(A/D)
POSITION VOLTAGE